# EUROPEAN PATENT SPECIFICATION

(11) **EP 4 083 733 B1**
(45) Date of publication and mention of the grant of the patent: **17.12.2025**
(21) Application number: 22169796.4
(22) Date of filing: 25.04.2022
(51) Int. Cl.: G05B 23/02, G01M 7/00, G01M 13/028, G01M 13/045

(54) **METHOD, SYSTEM AND COMPUTER PROGRAM FOR USING SENSOR DATA AND OPERATIONAL DATA OF AN INDUSTRIAL PROCESS TO IDENTIFY PROBLEMS**
VERFAHREN, SYSTEM UND COMPUTERPROGRAMM ZUR VERWENDUNG VON SENSORDATEN UND BETRIEBSDATEN EINES INDUSTRIELLEN PROZESSES ZUR IDENTIFIZIERUNG VON PROBLEMEN
PROCÉDÉ, SYSTÈME ET PROGRAMME INFORMATIQUE POUR UTILISATION DE DONNÉES DE CAPTEUR ET DE DONNÉES OPÉRATIONNELLES D'UN PROCESSUS INDUSTRIEL POUR IDENTIFIER DES PROBLÈMES

(30) Priority: 26.04.2021 US 202117240803
(43) Date of publication of application: 02.11.2022
(73) Proprietor: Rockwell Automation Technologies, Inc., Mayfield Heights, OH 44124-6188 (US)
(72) Inventor: Cai, Yongyao, Mayfield Heights, 44124 (US); Nair, Suresh R., Mayfield Heights, 44124 (US); Wolfe, Timothy P., Mayfield Heights, 44124 (US); Lane, Lee A., Mayfield Heights, 44124 (US); Taylor, Brian J., Mayfield Heights, 44124 (US); Sacherski, Burt, Mayfield Heights, 44124 (US); Killian, Ashley M., Mayfield Heights, 44124 (US); Zomchek, Kevin, Mayfield Heights, 44124 (US); Poublon, Michelle L., Mayfield Heights, 44124 (US); Gao, Linxi, Mayfield Heights, 44124 (US); Jaeger, Rebecca R., Mayfield Heights, 44124 (US); Foster, Wayne R., Mayfield Heights, 44124 (US)
(74) Representative: Grünecker Patent- und Rechtsanwälte PartG mbB

(56) References cited:
- US-A1- 2020 182 684
- US-A1- 2020 379 454

## Description

### BACKGROUND INFORMATION

The subject matter disclosed herein relates to locating problems in an industrial process and more specifically to using sensor data and operational data of an industrial process to identify problems.
US 2020/182684 A1 relates to systems and methods for monitoring of mechanical and electrical machines. A system for continuously monitoring at least one machine including a plurality of magnetic sensors synchronously sensing magnetic fields emitted by at least one machine, the plurality of magnetic sensors sensing the magnetic fields along a corresponding plurality of channels and outputting magnetic field emission signals corresponding to the magnetic fields, a signal analyzer receiving at least a portion of the magnetic field emission signals and performing analysis of the magnetic field emission signals, the signal analyzer providing an output based on the analysis, the output including at least an indication of a condition of the at least one machine and a control module receiving the indication of the condition and initiating at least one of a repair event on the at least one machine, an adjustment to a maintenance schedule of the at least one machine and an adjustment to an operating parameter of the at least one machine based on the indication, whereby efficacy of the at least one machine is improved.

### BRIEF DESCRIPTION

The invention is claimed in the independent claims.

Preferred embodiments are specified in the dependent claims.

A method comprising gathering sensor data according to claim 1 is provided.

A system comprising two or more sensors according to claim 9 is provided.

A computer program product according to claim 13 is provided.

### BRIEF DESCRIPTION OF THE DRAWINGS

In order that the advantages of the embodiments of the invention will be readily understood, a more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a system for using sensor data and operational data of an industrial process to identify failures;
Figure 2 is a schematic block diagram illustrating one embodiment of a process for using sensor data and operational data of an industrial process to identify failures;
Figure 3 is a schematic block diagram illustrating one embodiment of an apparatus for using sensor data and operational data of an industrial process to identify failures;
Figure 4 is a schematic block diagram illustrating another embodiment of an apparatus for using sensor data and operational data of an industrial process to identify failures;
Figure 5 is a schematic flowchart diagram illustrating one embodiment of a method for using sensor data and operational data of an industrial process to identify failures;
Figure 6 is a schematic flowchart diagram illustrating one embodiment of a method for using sensor data and operational data of an industrial process to develop signature information for a sensor; and
Figure 7 is a schematic flowchart diagram illustrating another embodiment of a method for using sensor data and operational data of an industrial process to identify failures.

### DETAILED DESCRIPTION

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. The term "and/or" indicates embodiments of one or more of the listed elements, with "A and/or B" indicating embodiments of element A alone, element B alone, or elements A and B taken together.

Furthermore, the described features, advantages, and characteristics of the embodiments may be combined in any suitable manner. One skilled in the relevant art will recognize that the embodiments may be practiced without one or more of the specific features or advantages of a particular embodiment. In other instances, additional features and advantages may be recognized in certain embodiments that may not be present in all embodiments.

These features and advantages of the embodiments will become more fully apparent from the following description and appended claims or may be learned by the practice of embodiments as set forth hereinafter. As will be appreciated by one skilled in the art, aspects of the present invention may be embodied as a system, method, and/or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, aspects of the present invention may take the form of a computer program product embodied in one or more computer readable medium(s) having program code embodied thereon.

Many of the functional units described in this specification have been labeled as modules, in order to more particularly emphasize their implementation independence. For example, a module may be implemented as a hardware circuit comprising custom very large scale integrated (VLSI) circuits or gate arrays, off-the-shelf semiconductors such as logic chips, transistors, or other discrete components. A module may also be implemented in programmable hardware devices such as a field programmable gate array (FPGA), programmable array logic, programmable logic devices or the like.

Modules may also be implemented in software for execution by various types of processors. An identified module of program code may, for instance, comprise one or more physical or logical blocks of computer instructions which may, for instance, be organized as an object, procedure, or function. Nevertheless, the executables of an identified module need not be physically located together but may comprise disparate instructions stored in different locations which, when joined logically together, comprise the module and achieve the stated purpose for the module.

Indeed, a module of program code may be a single instruction, or many instructions, and may even be distributed over several different code segments, among different programs, and across several memory devices. Similarly, operational data may be identified and illustrated herein within modules and may be embodied in any suitable form and organized within any suitable type of data structure. The operational data may be collected as a single data set or may be distributed over different locations including over different storage devices, and may exist, at least partially, merely as electronic signals on a system or network. Where a module or portions of a module are implemented in software, the program code may be stored and/or propagated on in one or more computer readable medium(s).

The computer readable medium may be a tangible, non-transitory computer readable storage medium storing the program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable storage medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store program code for use by and/or in connection with an instruction execution system, apparatus, or device.

The computer readable medium may also be a computer readable signal medium. A computer readable signal medium may include a propagated data signal with program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport program code for use by or in connection with an instruction execution system, apparatus, or device. Program code embodied on a computer readable signal medium may be transmitted using any appropriate medium, including but not limited to wire-line, optical fiber, Radio Frequency (RF), or the like, or any suitable combination of the foregoing.

In one embodiment, the computer readable medium may comprise a combination of one or more computer readable storage mediums and one or more computer readable signal mediums. For example, program code may be both propagated as an electro-magnetic signal through a fiber optic cable for execution by a processor and stored on RAM storage device for execution by the processor.

Program code for carrying out operations for aspects of the present invention may be written in any combination of one or more programming languages, including an object oriented programming language such as Python, Ruby, R, Java, Java Script, Smalltalk, C++, C sharp, Lisp, Clojure, PHP or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). The computer program product may be shared, simultaneously serving multiple customers in a flexible, automated fashion.

The computer program product may be integrated into a client, server and network environment by providing for the computer program product to coexist with applications, operating systems and network operating systems software and then installing the computer program product on the clients and servers in the environment where the computer program product will function. In one embodiment software is identified on the clients and servers including the network operating system where the computer program product will be deployed that are required by the computer program product or that work in conjunction with the computer program product. This includes the network operating system that is software that enhances a basic operating system by adding networking features.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

The embodiments may transmit data between electronic devices. The embodiments may further convert the data from a first format to a second format, including converting the data from a non-standard format to a standard format and/or converting the data from the standard format to a non-standard format. The embodiments may modify, update, and/or process the data. The embodiments may store the received, converted, modified, updated, and/or processed data. The embodiments may provide remote access to the data including the updated data. The embodiments may make the data and/or updated data available in real time. The embodiments may generate and transmit a message based on the data and/or updated data in real time. The embodiments may securely communicate encrypted data. The embodiments may organize data for efficient validation. In addition, the embodiments may validate the data in response to an action and/or a lack of an action.

Aspects of the embodiments are described below with reference to schematic flowchart diagrams and/or schematic block diagrams of methods, apparatuses, systems, and computer program products according to embodiments of the invention. It will be understood that each block of the schematic flowchart diagrams and/or schematic block diagrams, and combinations of blocks in the schematic flowchart diagrams and/or schematic block diagrams, can be implemented by program code. The program code may be provided to a processor of a general purpose computer, special purpose computer, sequencer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The program code may also be stored in a computer readable medium that can direct a computer, other programmable data processing apparatus, or other devices to function in a particular manner, such that the instructions stored in the computer readable medium produce an article of manufacture including instructions which implement the function/act specified in the schematic flowchart diagrams and/or schematic block diagrams block or blocks.

The program code may also be loaded onto a computer, other programmable data processing apparatus, or other devices to cause a series of operational steps to be performed on the computer, other programmable apparatus or other devices to produce a computer implemented process such that the program code which executed on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and computer program products according to various embodiments of the present invention. In this regard, each block in the schematic flowchart diagrams and/or schematic block diagrams may represent a module, segment, or portion of code, which comprises one or more executable instructions of the program code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and program code.

The description of elements in each figure may refer to elements of proceeding figures. Like numbers refer to like elements in all figures, including alternate embodiments of like elements.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

A method for using sensor data and operational data of an industrial process to identify problems is disclosed. A system and computer program product also perform the functions of the method. The method includes gathering sensor data from one or more sensors sensing conditions on equipment of an industrial process, receiving command information about operational commands issued to the equipment of the industrial process, and for each sensor of the one or more sensors, comparing the sensor data with signature information for the sensor. The signature information for the sensor is relevant for operational commands issued to the equipment. The method includes determining if the sensor data of a sensor of the one or more sensors exceeds the signature information corresponding to the sensor, locating a problem with a piece of equipment of the industrial process monitored by the sensor of the one or more sensors based on the sensor data exceeding the signature information for the sensor and issuing an alert reporting the problem.

According to the invention, the one or more sensors include two or more sensors and determining if the sensor data of a sensor of the one or more sensors exceeds the signature information corresponding to the sensor includes determining if the sensor data of at least two sensors of the two or more sensors simultaneously exceeds the signature information corresponding to each of the at least two sensors and locating the problem includes locating the problem based on the sensor data exceeding the signature information for the at least two sensors. In other embodiments, the sensor data for each sensor of the two or more sensors is synchronized with each other and synchronized with the command information of the issued operational commands. In other embodiments, at least a portion of the two or more sensors sense conditions associated with two or more pieces of equipment of the industrial process. In other embodiments, at least a portion of the two or more sensors are embedded in one or more pieces of equipment of the industrial process and at least a portion of the two or more sensors are part of a machine safety monitoring system and/or a condition monitoring system.

In some embodiments, the signature information for each sensor of the one or more sensors is derived by gathering sensor data from the one or more sensors during a training period, gathering command information about operational commands issued to the equipment of the industrial process during the training period, correlating sensor data for each of the one or more sensors with the command information, and deriving signature information for each sensor of the one or more sensors for various operational conditions associated with the command information. The signature information represents normal operation. In other embodiments, the training period includes a period when the equipment of the industrial process is functioning as intended. In other embodiments, the method includes updating the signature information for operations beyond the training period. In other embodiments, the method includes using machine learning for deriving the signature information.

In some embodiments, the problem with the piece of equipment includes a developing problem prior to a failure of at least a part for the piece of equipment and the alert includes a notification ahead of the failure. In other embodiments, at least a portion of the one or more sensors sense vibration information. According to the invention, determining if the sensor data of a sensor of the one or more sensors exceeds the signature information for the sensor further includes excluding transient data. In other embodiments, a sensor of the one or more sensors senses vibration, acoustic noise, temperature, pressure, strain, movement in a 3-dimensional space, voltage and/or current.

A system for using sensor data and operational data of an industrial process to identify problems includes two or more sensors sensing conditions on equipment of an industrial process, a sensor module configured to gather sensor data from the two or more sensors and a command module configured to receive command information about operational commands issued to the equipment of the industrial process. The system includes a comparison module configured to, for each sensor of the two or more sensors, compare the sensor data with signature information for the sensor. The signature information is for the sensor is relevant for operational commands issued to the equipment. The system includes a signature module configured to determine if the sensor data of at least two sensors of the two or more sensors simultaneously exceeds the signature information corresponding to each of the at least two sensors. The system includes a location module configured to locate a problem with a piece of equipment of the industrial process monitored by the two or more sensors based on the sensor data exceeding the signature information for the at least two sensors and an alert module configured to issue an alert reporting the problem. At least a portion of the modules include one or more of hardware circuits, a programmable hardware device and executable code. The executable code is stored on one or more computer readable storage media.

In some embodiments, the system includes a synchronization module configured to synchronize the sensor data for each sensor of the two or more sensors with each other and with the command information of the issued operational commands. In other embodiments, the signature information for each sensor of the two or more sensors is derived by using machine learning to gather sensor data from two or more sensors during a training period, gather command information about operational commands issued to the equipment of the industrial process during the training period, correlate sensor data for each of the two or more sensors with the command information, and derive signature information for each sensor of the two or more sensors for various operational conditions associated with the command information. The signature information represents normal operation.

In other embodiments, the system includes a transient filter module configured to exclude transient data from a sensor data of a sensor of the two or more sensors while the signature module determines if the sensor data exceeds the signature information for the sensor. In other embodiments, at least a portion of the two or more sensors are embedded in one or more pieces of equipment of the industrial process and at least a portion of the two or more sensors are part of a safety monitoring system and/or a condition monitoring system.

A computer program product for using sensor data and operational data of an industrial process to identify problems includes a computer readable storage medium having program code embodied therein. The program code is executable by a processor for gathering sensor data from one or more sensors sensing conditions on equipment of an industrial process, receiving command information about operational commands issued to the equipment of the industrial process, and for each sensor of the one or more sensors, comparing the sensor data with signature information for the sensor. The signature information for the sensor is relevant for operational commands issued to the equipment. The program code is executable by the processor for determining if the sensor data of a sensor of the one or more sensors exceeds the signature information corresponding to the sensor, locating a problem with a piece of equipment of the industrial process monitored by the sensor of the one or more sensors based on the sensor data exceeding the signature information for the sensor, and issuing an alert reporting the problem.

In some embodiments, the program code is further configured to derive the signature information for each sensor of the one or more sensors by gathering sensor data from one or more sensors during a training period, gathering command information about operational commands issued to the equipment of the industrial process during the training period, correlating sensor data for each of the one or more sensors with the command information, and deriving, using machine learning, signature information for each sensor of the one or more sensors for various operational conditions associated with the command information, the signature information representing normal operation.

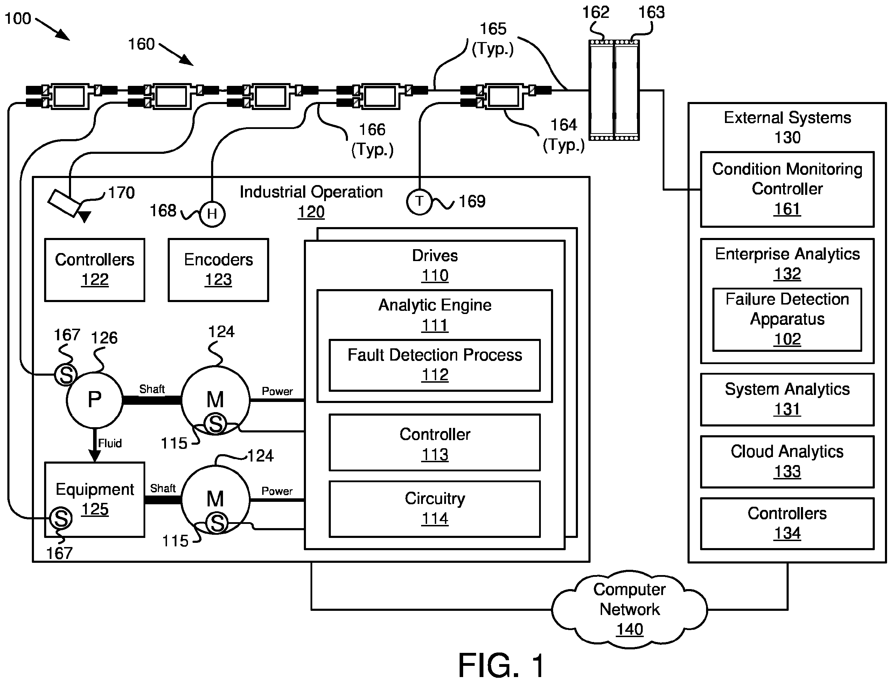

Figure 1 is a schematic block diagram illustrating one embodiment of a system 100 for using sensor data and operational data of an industrial process to identify failures. The industrial automation environment ("environment") 100 includes drives 110, an industrial process 120, and external systems 130. The drives 110 include an analytic engine 111, a controller 113, and circuitry 114. The industrial process 120 illustrated in Figure 1 includes internal sensors 115, PLC automation controllers 122 (e.g. PLC 122), encoders 123, machines 124, industrial equipment 125 and a pump 126. External systems 130 include system analytics 131, enterprise analytics 132, cloud analytics 133, and PLC automation controllers 134 (e.g. PLC 134). The industrial process 120 may represent any industrial machine or system, which may include rotating machines 124, processing machines, assembly line equipment, etc. The rotating machines 124, in some embodiments, are powered by a drive 110.

The components of the drive 110 and the industrial process 120 may differ depending on a given implementation and machine type. Systems shown herein may include additional components, fewer components, and different components and may still be in accordance with the technology of the present example. Likewise, the internal sensors 115, the PLC automation controllers 122, and the encoders 123 may each represent any number of sensors, controllers, and encoders, respectively, associated with an industrial process 120. The external systems 130 serve to represent or include any layer of an industrial automation environment external to drives 110, where external analytics may collect and analyze data from the analytic engine 111 and/or separately from the analytic engine 111 and perform system analytics.

In embodiments with a VFD and motor, the drive 110 may be a VFD which supplies power to a motors of the industrial process 120 and receives signal data from the industrial process 120. The analytic engine 111 runs a fault detection process 112 to detect faults within the industrial process 120 based on the signal data. The analytic engine 111, in some embodiments, is a configurable analytics processor that provides flexibility for condition monitoring and includes an application layer that hides complexity and simplifies the user experience for individual applications and fault detection. The analytic engine 111 may be configured to monitor various applications and detect degradation or other faults of a motor and a connected mechanical load, such as the industrial equipment 125 or pump 126, from the industrial process 120.

The industrial automation environment 100, in some embodiments, includes an external condition monitoring system 160 with a controller 161 where the external condition monitoring system 160 is external to equipment 122-126 and drives 110 of the industrial process 120. The external condition monitoring system 160, in some embodiments, includes a safety relay 162, a network interface 163, connection taps 164, trunk line conductors 165, tap conductors 166, and external sensors such as vibration sensors 167, a humidity sensor 168 and a temperature sensor 169, a camera 170, which are described below.

In some embodiments, the external condition monitoring system 160 includes a network interface 163 connected to a safety relay 162. The network interface 163 provides a network connection to the condition monitoring controller 161. For example, the external condition monitoring system 160 may include one internet protocol ("IP") address and may be able to provide information from safety devices through the single IP address to the condition monitoring controller 161. Such an arrangement beneficially reduces the number of IP addresses for a plant with one or more industrial operations 120. Other networking interfaces 163 may include more than one IP address, for example, for multiple safety relays 162 or multiple lines from a safety relay 162. In addition to the external sensors, the external condition monitoring system 160 may include other safety devices, such as a non-contact switch, a light curtain, a locking switch, an emergency stop, a light curtain, an actuator, a cable pull switch, a key interlock switch, and the like. In other embodiments, one or more external sensors and/or safety devices include an IP address. In other embodiments, the external sensors and/or safety devices run on a proprietary network different than an IP network. In other embodiments, the external sensors connect directly to the condition monitoring controller 161.

The external sensors 167 are external in that the external sensors 167 are not integral with the machines 124 and/or drives 110. The term "external sensor" and "internal sensor" are used merely to connote that the external sensors 167 are connected to the external condition monitoring system 160 and the internal sensors 115 are connected to the drives 110 and "internal" versus "extemal" are not used herein to describe actual location of the sensors 115, 167 with respect to equipment. In some embodiments, information from the external sensors 167 complement information from the internal sensors 115 and may facilitate locating a potential failure. For example, vibration data from an external vibration sensor 167 in the pump 126 along with vibration data from an internal sensor 115 in a connected machine 124 may be used to determine if the source of the vibration is in the pump 126 or machine 124.

In some embodiments, the external condition monitoring system 160 includes one or more vibration sensors 167 located in various equipment (e.g. 125, 126) of the industrial process 120. The vibration sensors 167, in some embodiments, are positioned to detect vibration in bearings, bearing races, belts, gears, and the like, to detect cavitation in the pump 126 or other potential sources of vibration. In other embodiments, the external condition monitoring system 160 includes acoustic sensors to detect sound caused by vibration or other problem noises. The external condition monitoring system 160 or industrial process 120 may include other sensors types, such as pressure sensors, flow sensors, and the like. One of skill in the art will recognize other equipment and locations in the industrial process 120 to monitor with a vibration sensor 167, acoustic sensors, etc.

In some embodiments, the sensors 115, 167 are accelerometers. The accelerometers are mounted to detect vibration of a particular part of a machine 124 or other equipment, and mountings of the sensors 115, 167 may be a magnetic mounting, an epoxied mounting or a stud mounting where the type of mounting may be selected based on a desired frequency range of the accelerometers. In some embodiments, the sensors 115, 167 are piezoelectric sensors, such as integrated circuit piezoelectric ("ICP") industrial accelerators. In some embodiments, the sensors 115, 167 are dual output sensors, which may measure two parameters such as vibration and temperature. In some embodiments, a sensor 115, 167 may be an eddy current probe for vibration measurement on machines 124 with fluid film bearings. In some embodiments, sensors 115, 167 are selected based on expected frequencies used for analysis. For example, some sensors 115, 167 may be selected to measure maximum frequencies ("FMAX") up to about 2 kilo hertz ("kHz") or 5 kHz. Other sensors 115, 167 may sense frequencies up to 40 kHz and beyond when measuring spike energy.

In some embodiments, the external condition monitoring system 160 includes one or more humidity sensors 168 to monitor humidity in or around the industrial process 120. Humidity may increase corrosion, rust, etc. and may contribute to equipment failures. In other embodiments, the external condition monitoring system 160 includes one or more temperature sensors 169 to monitor temperature in or around the industrial process 120. In other embodiment, one or more temperature sensors 169 are located inside equipment. Abnormal temperature may increase equipment failures. In other embodiments, the external condition monitoring system 160 includes other sensors, such as chemical sensors, to monitor conditions in the industrial process 120. One of skill in the art will recognize other sensors useful by the failure detection apparatus 102 to predict failures.

In some embodiments, the external condition monitoring system 160 includes one or more cameras 170 to monitor movement in or around the industrial process 120. The cameras 170, in some embodiments, provide information about movement of people, movement of portable equipment and supplies, movement of vehicles, such as forklifts, etc. Information from the cameras 170 may be used to identify transient conditions, for example, vibrations caused by personnel or equipment moving by other equipment 124, 125, 126.

Although the analytic engine 111 may be in communication with any analytics system of the external systems 130, for some types of faults/failures/problems the analytics engine 111 does not require external systems 130 to perform condition monitoring in accordance with the technology disclosed herein. Information about certain faults, failures or problems are fed to the failure detection apparatus 102 and combined with other sensor data to predict and/or detect faults and failures. As used herein, the terms faults, failures and problems are used interchangeably. To perform condition monitoring within a drive 110, the analytic engine 111 may implement the fault detection process 112 independently from external systems 130. However, in some examples discussed herein, the external systems 130, and specifically the failure detection apparatus 102, may be in communication with analytic engine 111, components of the industrial process 120, or combinations thereof and the failure detection apparatus 102 of the external systems 130 may perform condition monitoring independently of the analytic engine 111 or based on data from the analytic engine 111.

In some examples, an enterprise such as the failure detection apparatus 102 may use the analytic engine 111 as one component of a greater condition monitoring and analysis system within the enterprise. A modular topology may utilize the analytic engine 111 at the device level in addition to processes and analyses performed at the system and enterprise level, such as condition monitoring by the external condition monitoring system 160. At the device level, the analytic engine 111 may collect data from internal sensors 115 of devices of the industrial process 120 and other sources in various formats.

The analytic engine 111 may use collected data to perform condition monitoring, power and energy monitoring, predictive life analysis, load characterization, or similar analyses. At the system level, system analytics 131 may aggregate and contextualize information to detect system level fault conditions and/or provide insights related to preventative maintenance, energy diagnostics, system modeling, performance optimization, and similar insights. At the enterprise level, enterprise analytics 132, cloud analytics 133, or a combination thereof may present information to users on devices and systems including mobile devices and desktop computers to enable remote learning, machine learning, and root cause analysis. Specifically, the failure detection apparatus 102 uses information from the analytic engine 111 and from the condition monitoring controller 161 to predict and detect failures, problems, etc. In Figure 1 the failure detection apparatus 102 is depicted in the enterprise analytics 132, but may reside in the condition monitoring controller 161, a server, a cloud computing environment, the system analytics 131 or other convenient location. In other embodiments, the failure detection apparatus 102 is located in the analytic engine 111.

The computer network 140 may be wired, wireless or a combination of both. The computer network 140 may include a local area network ("LAN"), a wide area network ("WAN"), a fiber optic network, a proprietary network, the Internet, a wireless connection, and/or the like. The wireless connection may be a mobile telephone network. The wireless connection may also employ a Wi-Fi network based on any one of the Institute of Electrical and Electronics Engineers ("IEEE") 802.11 standards. Alternatively, the wireless connection may be a BLUETOOTH^{®} connection. In addition, the wireless connection may employ a Radio Frequency Identification ("RFID") communication including RFID standards established by the International Organization for Standardization ("ISO"), the International Electrotechnical Commission ("IEC"), the American Society for Testing and Materials^{®} ("ASTM"^{®}), the DASH7^{™} Alliance, and EPCGlobal^{™},

Alternatively, the wireless connection may employ a ZigBee^{®} connection based on the IEEE 802 standard. In one embodiment, the wireless connection employs a Z-Wave^{®} connection as designed by Sigma Designs^{®}. Alternatively, the wireless connection may employ an ANT^{®} and/or ANT+^{®} connection as defined by Dynastream^{®} Innovations Inc. of Cochrane, Canada. The wireless connection may be an infrared connection including connections conforming at least to the Infrared Physical Layer Specification ("IrPHY") as defined by the Infrared Data Association^{®} (IrDA^{®}). Alternatively, the wireless connection may include a cellular telephone network communication. All standards and/or connection types include the latest version and revision of the standard and/or connection type as of the filing date of this application.

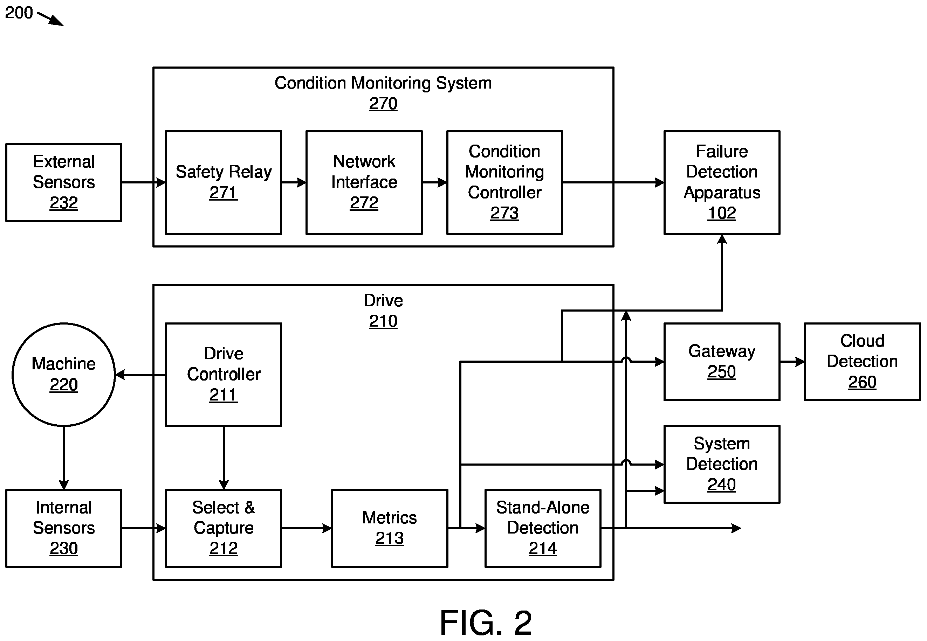

Figure 2 is a schematic block diagram illustrating one embodiment of a process 200 for using sensor data and operational data of an industrial process to identify failures. The process 200 includes a drive 210, and in some embodiments, is representative of a variable frequency that includes an analytics engine 111 such as in the drive 110 of Figure 1. Components of the drive 210 serve to represent functionality of a drive comprising an analytics engine 111 for device-level condition monitoring. A drive controller 211 provides an output supplied to a machine 220, which may be representative of any machine-driven industrial operation including the industrial process 120 of Figure 1. The internal sensors 230 may include vibration, temperature, acoustic, pressure, flow or other external sensors that collect data related to operation of the machine 220 and provide the data to a select and capture module 212.

The select and capture module 212, in some embodiments, collects data from a drive signal or an internal sensors 230, depending on what signal is selected, and provides the captured data to a metrics module 213. The select and capture module 212, in some embodiments, is used during baseline and runtime captures, such as at different machine speeds and loading conditions. The metrics module 213 processes the data to generate metrics data that can be utilized for fault detection and prediction by the failure detection apparatus 102. The data collected by the select and capture module 212 and processing performed by the metrics module 213 may, in some embodiments, depend on settings specific to one or more fault conditions being monitored. For example, for a given fault condition, settings may change which drive signal is selected to capture in the select and capture module 212 as well as the manner in which the metrics module 213 processes the data by changing signal paths to implement various filters and algorithms, performing measurements, utilizing specific parameters, or other settings that may affect processing to produce metrics specific to a fault condition. In some embodiments, metrics are calculated independently for baseline and runtime captures and then differences are calculated between them. Metrics may then be output by the metrics module 213 and provided to one or more systems and modules for condition monitoring, such as to the failure detection apparatus 102.

The output of the metrics module 213 is provided to the stand alone detection module 214 which may then use the metrics produced by the metrics module 213 to perform fault detection within the drive 210, such as comparing vibration information for a particular machine speed with a vibration signature for the machine speed to identify faults. Standalone detection, in some examples, includes determining if one or more fault conditions is present based on the settings specific to at least one fault being monitored. Detection methods include thresholding or machine learning. In addition to supplying the metrics to the stand alone detection module 214, metrics may be provided to additional systems for condition monitoring or other purposes. In the present example, metrics are provided to the failure detection apparatus 102 for predicting and detecting faults, failures, problems, etc. In a further example, metrics are provided to a system detection module 240 for other system-level fault/failure detection. Metrics, in some embodiments, are also provided to gateway 250 and ultimately to cloud detection module 260 for enterprise-level fault detection. Metrics may also be provided to additional systems or locations. Similarly, stand-alone detection module 214 may provide detection results to one or more external locations including system detection module 240. In some embodiments, the stand-alone detection module 214 may provide results to a gateway 250, a cloud detection module 260, or any other system in communication with the stand-alone detection module 214.

One or more external sensors 232 in the depicted embodiment, such as the external sensors 167 of Figure 1, provide information to a safety relay 271 of a condition monitoring system 270, such as the safety relay 162 and the external condition monitoring system 160 of Figure 1. The safety relay 271 provides information to a network interface 272 for transmittal over a computer network to a condition monitoring controller 273, which transmits information to failure detection apparatus 102. In some embodiments, the network interface 272 is similar to the network interface 163 and the condition monitoring controller 273 is similar to the condition monitoring controller 161 of Figure 1. The network interface 272, in some embodiments, is a network gateway with an IP address. In other embodiments, the external sensors 232 transmit data directly to the condition monitoring controller 273.

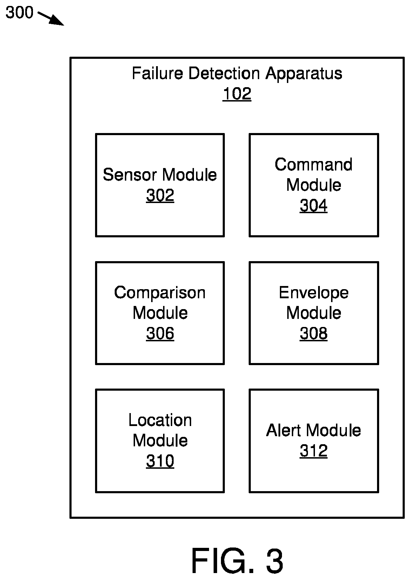

Figure 3 is a schematic block diagram illustrating one embodiment of an apparatus 300 for using sensor data and operational data of an industrial process to identify failures. The apparatus includes one embodiment of the failure detection apparatus 102 with a sensor module 302, a command module 304, a comparison module 306, a signature module 308, a location module 310 and an alert module 312, which are described below.

The apparatus 300 includes one embodiment of a sensor module 302 configured to gather sensor data from one or more sensors (e.g. 115, 167, 168, 169, 170, etc.) sensing conditions on equipment (e.g. 124, 125, 126) of an industrial process 120. In some embodiments, the sensor module 302 gathers real-time sensor data. In other embodiments, the sensor module 302 gathers sensor data that has been buffered, grouped, processed, delayed, compressed, etc. In some embodiments, the sensor module 302 samples sensor data at a sampling rate. One of skill in the art will recognize other ways for the sensor module 302 to gather sensor data.

The sensor data may be from various types of sensors, such as the sensors 115, 167, 168, 169, 170 depicted as well as other types of sensors. The sensors may sense vibration, acoustic noise, temperature, pressure, strain, movement in a 3-dimensional space, voltage, current, power, or other information known to those of skill in the art. Some sensed data may be used to directly identify a problem while other sensed data may be used to identify current conditions or other factors that may be used in locating, identifying, etc. a problem with equipment 124, 125, 126. For example, a vibration sensor 115 may sense vibrations while a current sensor in a machine 124 where the vibration sensor 115 is located. A particular current level may be indicative of the machine 124 running at full load so that higher vibrations may be expected compared to lower current, and thus lower motor load. In other situations, high vibration data while current is low may be indicative of a problem. Other vibration data while current is low may be due to a nearby piece of equipment 125 turning on, a forklift moving by, etc. Using sensor data from multiple sensors (115, 167, 168, 169, 170, etc.) helps to identify a problem and distinguish the problem from other occurrences near the equipment (e.g. 124) with the problem.

The apparatus 300 includes an embodiment of a command module 304 configured to receive command information about operational commands issued to the equipment 124, 125, 126 of the industrial process 120. The command module 304, in some embodiments, receives command information such as start and stop commands, commands to vary speeds, maintain a particular speed, start dispensing a substance into a container, motor control commands, and other commands to any of the equipment 124, 125, 126 of the industrial process 120.

In some embodiments, the command module 304 receives command information by monitoring commands issued by PLCs 122, 134. The PLCs 122, 134 typically control the equipment 124,125, 126 of the industrial process 120 at a high level. For example, a PLC automation controller 122, 134 may send a command to a drive 110, which then sends additional commands to a machine 124. The PLCs 122, 134 may send commands to other equipment 125, 126 of an assembly line, processing equipment, or other equipment of the industrial process 120. The PLCs 122, 134, in some embodiments, interacts with external condition monitoring systems 160, which may include a machine safety system. One of skill in the art will recognize other commands and interactions with PLCs 122, 134 and ways for the command module 304 to interact with the PLCs 122, 134.

In other embodiments, the command module 304 receives command information on a more granular level from lower level controllers, such as the drives 110. Command information from the lower level controllers may be useful to gain insights into operating conditions of equipment 124, 125, 126, such as load levels of a machine 124. For example, a PLCs 122, 134 may send a generic run command to a drive 110 but load level of the machine 124 connected to the drive 110 may vary based on what the machine 124 is driving. For example, if the motor is driving a conveyor belt, amounts of product on the conveyor belt may vary. Thus, the command module 304 receiving command information from the drive 110 may be useful in determining a state of the machine 124 as well as other equipment 125, 126.

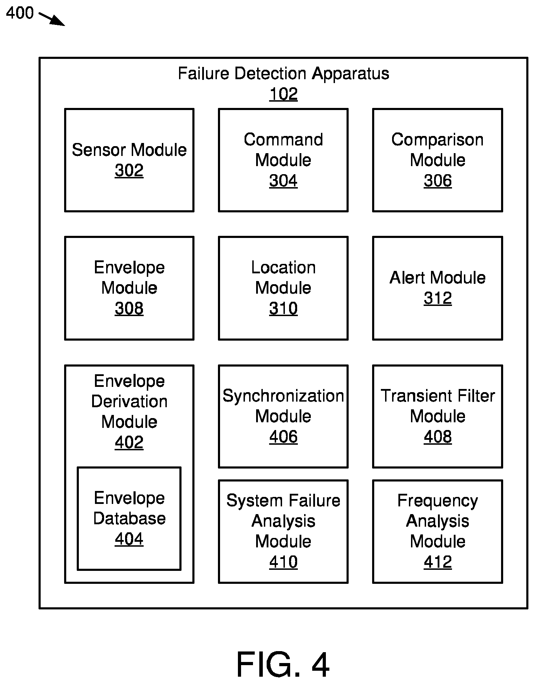

The apparatus 300 includes a comparison module 306 configured to, for each sensor 115, 167, 168, 169, 170, compare the sensor data with signature information for the sensor 115, 167, 168, 169, 170. The signature information for the sensor 115, 167, 168, 169, 170 is relevant for operational commands issued to the equipment 125, 125, 126. The signature information is for normal operations when the equipment 124, 125, 126 of the industrial process 120 is running normally without any faults, problems, etc. For example, for a vibration sensor 115 in a machine 124, the signature information may include expected vibration amplitudes at various frequencies based on a Fast Fourier Transform ("FFT") of data while the machine 124 is running at a particular speed, with a particular amount of load and while other nearby equipment is also running, as described below with respect to the frequency analysis module 412 of Figure 4.

The nearby equipment 125, 126 may produce some vibrations that may affect vibrations sensed by the vibration sensor 115. Likewise, motor speed may also affect the vibrations sensed by the vibration sensor 115. Other factors may also affect vibrations sensed by the vibration sensor 115. The signature information for the vibration sensor 115 may be different, for example, if surrounding equipment 125, 126 is stopped, running at different speeds, etc. In some embodiments, the sensor 115 includes several versions of signature information for different operating conditions.

In some embodiments, the comparison module 306 selects the signature information based on current operating conditions from the command module 304. For example, the command module 304 may identify that that the machine 124 is operating at full speed and half load while nearby equipment 125, 126 is operating at full capacity. The comparison module 306 then selects signature information for the vibration sensor 115 that most closely matches these current conditions. The comparison module 306, after selecting the right signature information for the vibration sensor 115, compares the signature information with sensor data from the sensor module 302.

The apparatus 300 includes a signature module 308 configured to determine if the sensor data of the sensor 115 exceeds the signature information corresponding to the sensor 115. In other embodiments, the signature module 308 is configured to determine if the sensor data of the sensor 115 exceeds the signature information corresponding to the sensor 115 by a threshold amount. Where the signature information includes an amplitude, the signature module 308 may use a single threshold amount. In other embodiments where the signature information is for various frequencies, the threshold amount may vary as a function of frequency. The threshold amount, in various embodiments, varies depending on current operating conditions, whether or not multiple sensors 115, 167 are involved, and the like. In some examples, the signature module 308 includes multiple thresholds where each threshold has a different meaning and may trigger different actions.

The apparatus 300 includes a location module 310 configured to locate a problem with a piece of equipment (e.g. the machine 124) of the industrial process 120 monitored by the sensor 115 based on the sensor data exceeding the signature information for the sensor 115 and an alert module 312 configured to issue an alert reporting the problem. In some embodiments, the location module 310 may determine that a single sensor 115 has sensor data exceeding the signature information by a threshold amount so the alert module 312 issues the alert. In other embodiments, more than one sensor (e.g. 115, 167) sense vibrations exceeding the signature information corresponding to each sensor 115, 167. The location module 310 in this situation may determine an amount that sensor data of each sensor 115, 167 exceeds the corresponding signature information and uses the amount that the sensor data of each sensor 115, 167 exceeds the corresponding signature information to locate the problem. The location module 310, in various embodiments, uses FFT, amplitudes, etc. to locate the problem. As used herein, the location module 310 locating the problem includes a physical location of a piece of equipment (e.g. a machine 124), a particular part and/or a particular type of problem.

In some embodiments, the problem with the piece of equipment (e.g. 124) is a developing problem prior to a failure of at least a part for the piece of equipment 124 and the alert is a notification ahead of the failure. Typically, actual failures cause equipment to stop or some type of sensor to identify that the equipment has failed. Advantageously, the embodiments described in relation to the apparatuses 300, 400 described herein help to identify a problem before a failure by using signature information related to current operating conditions of the industrial process 120 where typical systems are based on thresholds for worst case conditions that are often more related to actual failures than problems that can be caught prior to the actual failures.

Figure 4 is a schematic block diagram illustrating another embodiment of an apparatus 400 for using sensor data and operational data of an industrial process to identify failures. The apparatus 400 includes another embodiment of the failure detection apparatus 102 with a sensor module 302, a command module 304, a comparison module 306, a signature module 308, a location module 310 and an alert module 312, which are substantially similar to those describe above in relation to the apparatus 300 of Figure 3. The failure detection apparatus 102, in various embodiments, includes one or more of a signature derivation module 402 with a signature database 404, a synchronization module 406, a transient filter module 408, a system failure analysis module 410 and a frequency analysis module 412, which are described below.

The apparatus 400, in some embodiments, includes a signature derivation module 402 configured to gather sensor data from the sensors 115, 167, 168, 169, 170, etc. during a training period, gather command information about operational commands issued to the equipment 124, 125, 126 of the industrial process 120 during the training period, correlate sensor data for each of the one or more sensors 115, 167, 168, 169, 170, etc. with the command information and derive signature information for each sensor of the one or more sensors 115, 167, 168, 169, 170, etc. for various operational conditions associated with the command information. The signature information represents normal operation within the industrial process 120.

The signature derivation module 402, in some embodiments, derives signature information for selected sensors, such as the sensors 115, 167 closely related to the equipment 124, 125, 126 while using sensor data from other sensors (e.g. temperature sensors 169, cameras 170, humidity sensors 168, input from the PLCs 122, 134, and the like) to determine if the equipment 124, 125, 126 is operating normally. However, some equipment (e.g. 124) may have temperature sensors 169 or other sensors of different types so the signature derivation module 402 may also derive signature information for these sensors directly tied to equipment 124, 125, 126. The training period, in some embodiments, is a period when the equipment 124, 125, 126 of the industrial process 120 is functioning as intended. In other embodiments, the training period may include transients but the sensor data during the transients is excluded, as discussed below.

In some embodiments, the signature derivation module 402 derives signature information specifically for equipment 124, 125, 126 for the industrial process 120 because of interaction between nearby equipment 124, 125, 126. For example, a machine 124 may be tied to a pump 126 so that vibrations from the pump 126 may be picked up by a vibration sensor 115 of the machine 124 along with vibrations caused by the machine 124 and vibrations caused by the machine 124 may be picked up by the vibration sensor 167 of the pump 126 along with vibrations from the pump 126. Thus, signature information for some other machine 124 in the industrial process 120 or from some other industrial process may not be applicable to the machine 124 connected to the pump 126.

In other embodiments, signature information from another piece of equipment may be used for a piece of equipment (for example, a machine 124) in the industrial process 120. For example, sensor data may show little affect from surrounding equipment 124, 125, 126 so the signature information from another machine 124 may be accurate enough. In other embodiments, signature information from another piece of equipment may be used for a piece of equipment (for example, a machine 124) in the industrial process 120 as initial signature information where the signature derivation module 402 updates the signature information for the specific piece of equipment (e.g. machine 124).

In some embodiments, the signature derivation module 402 uses machine learning to derive the signature information. For example, the signature derivation module 402 may use machine learning to gather sensor data for a particular sensor (e.g. 115) along with data from other sensors 167, 168, 169, 170, etc. to exclude influence of other nearby equipment 124, 125, 126, to identify transient conditions, to identify normal operations, and the like. The signature derivation module 402 typically uses machine learning to refine signature information over time. The machine learning, in some embodiments includes an algorithm implementing a neural network with various inputs from sensors 115, 167, 168, 169, 170, etc., the PLCs 122, 134, etc. and nodes with parameters that change as more input is received. The machine learning algorithm outputs various signature information where each sensor (e.g. 115, 167, 168, 169, 170, etc.) may include multiple instances of signature information for different operating conditions. The machine learning may also be implemented using other artificial intelligence methods and algorithms.

In some embodiments, the signature derivation module 402 stores signature information in a signature database 404. The signature database 404 may be implemented as a database but may also be implemented in other ways, such as a table, a list or other appropriate data structure. The signature database 404 may be stored in one or more locations accessible to the failure detection apparatus 102, such as an internal drive, in a storage area network, in a cloud computing network, or the like. One of skill in the art will recognize other ways to implement and locate the signature database 404.

The apparatus 400, in some embodiments, includes a synchronization module 406 configured to synchronize sensor data of two or more sensors 115, 167, 168, 169, 170, etc. with each other and with the command information of the issued operational commands. In some embodiments, the synchronization module 406 includes a universal clock and sends a time signal to various components of the industrial process 120, relevant external systems 130, external condition monitoring system 160, etc. In other embodiments, the synchronization module 406 synchronizes data based on known propagation delays of pathways to sensors 115, 167, 168, 169, 170, etc., to the PLCs 122, 134, to the drives 110, etc. Synchronization helps to align events within received data and command information to help exclude transients and to better analyze and understand correlations between events seen from the sensor data and issued commands.

The apparatus 400, in some embodiments, includes a transient filter module 408 configured to exclude transient data from a sensor data of a sensor (e.g. 115) while the signature module 308 determines if the sensor data exceeds the signature information for the sensor 115. For example, vibration may be attributed to transient conditions, normal conditions or abnormal conditions. The transient conditions may cause vibrations that may be picked up by a sensor 115 and include startup of the machine 124 with the sensor 115, changing speed of the machine 124 with the sensor 115, startup of a nearby machine 124, a forklift driving by, a person placing a package, tools, etc. nearby, etc., which are normal events that are not indicative of an abnormal condition. However, the vibrations caused by the transient events may affect sensor data from the sensor 115, which may affect comparing sensor data of the sensor 115 with an appropriate signature or may affect derivation of signature information. Excluding the transient data typically increases performance of the failure detection apparatus 102, which is looking for abnormal conditions different than conditions caused by a transient during typical operations.

In some instances, the transient filter module 408 monitors sensors 115, 167, 168, 169, 170, etc. to determine if a transient condition still exists. For example, sensor data from a camera 170 may be used to determine if a forklift near a machine 124 has left yet. In other instances, the transient filter module 408 filters out sensor data for a particular period of time. For example, a motor startup transient may be known to take a particular amount of time so the transient filter module 408 filters out transient data from the start of the transient and then for a prescribed amount of time. Each transient type may have a different amount of time that the corresponding transient is expected to last. One of skill in the art will recognize other transient types where sensor data should be excluded, will recognize how long the transients will last, how to sense the transients, etc.

The apparatus 400, in some embodiments, includes a system failure analysis module 410 configured to determine, from the sensor data, command information, amounts the sensor data exceeded appropriate signature information, location of the problem, etc., what type of problem is occurring or will occur. For example, the system failure analysis module 410 may determine that a particular bearing of a machine 124 is starting to fail, that a roller of a conveyor is developing a flat spot, etc. the system failure analysis module 410, in some embodiments, provides information to or works with the alert module 312 to indicate a type of failure or potential failure to be included in the alert. In other embodiments, the alert module 312 performs the functions of or includes the system failure analysis module 410.

In addition to the sensor module 302 receiving vibration information from a vibration sensor 115, in some embodiments, the command module 304 receives information about machine speed. The command module 304 receives information about machine speed at the time the vibrations are sensed and associates the machine speed with the measured vibration. In some embodiments, the command module 304 accesses information from a tachometer (not shown) positioned to measure machine speed of the machine 124. In other embodiments, the command module 304 receives machine speed by receiving information from the drive 110 regarding machine speed. For example, the drive 110 may access a tachometer or other sensor on the machine 124 to determine machine speed. In other embodiments, the command module 304 receives information about machine speed uses a commanded machine speed of the machine 124 rather than measured machine speed. For example, the sensor module 302 may exclude vibration information until after a transient period so that the machine 124 is likely to be at a commanded machine speed. One of skill in the art will recognize other ways for the sensor module 302 to receive sensor data that includes vibrations information at a particular machine speed.

The sensor module 302, in some embodiments, receives vibration sensor data for a particular time period where the time period provides enough vibration data to analyze the measured vibration information. In one example, the sensor module 302 receives sensor data with vibration information for a time period sufficient for a frequency analysis on the vibration information. In some examples, the time period is sufficient for a Fast Fourier Transform ("FFT") analysis. In other embodiments, the time period is sufficient for other analyses. In other embodiments, the sensor module 302 receives sensor data at a particular sampling rate sufficient for an intended frequency range.

In some embodiments, the sensor module 302 includes various filters. For example, a channel of the sensor module 302 connected to a sensor 115, 167 may use a low pass filter on measured vibration information to filter out frequencies above a maximum frequency ("FMAX"). FMAX, in some embodiments, is 2 kHz, but may be higher or lower. In some embodiments, vibration information below about 2 kHz may capture vibrations for machine speeds around 60 Hz and below. Where a machine 124 is running at 3600 revolutions-per-minute ("rpm"), which corresponds to 60 Hz, energy from various bearings and other machine parts may vibrate at multiples of 60 Hz so that and may be below about 2 kHz. In other embodiments, an available FMAX may be 5 kHz.

In other embodiments, the sensor module 302 includes one or more high pass filters used to measure frequencies higher than those passed by the low pass filters. Often, vibration information at frequencies higher than about 2 kHz have magnitudes much less than vibration information below about 2 kHz and would be drowned out without a high pass filter. Typically, a sensor 115, 167 has one or more natural resonant frequencies so that rotation of bearings, rotor spin, etc. causes vibration energy at the natural resonant frequencies. Energy measured around the natural frequencies of a sensor 115, 167, in some embodiments, is called spike energy with units of gSE (spike energy acceleration). Just as striking a tuning fork causes the tuning fork to ring louder, rough bearings or other faults may cause more spike energy in terms of higher amplitudes at the natural resonant frequencies of the sensors 115, 167, and increased spike energy may be used to predict some impeding faults.

The apparatus 400 includes a frequency analysis module 412 configured to perform an operational frequency analysis of vibration information received by the sensor module 302. The comparison module 306 then uses the operational frequency analysis to compare with the sensor data. The operational frequency analysis, in some embodiments, is for vibrational information measured while the machine 124 is in an operational mode. The operational mode, in some embodiments, is a mode different than a setup mode, learning mode or other similar mode used to establish baseline information, such as vibration signatures. In other embodiments, the operational mode occurs when the machine 124 is operating to drive equipment as an intended purpose for the machine 124 or other period where baseline vibration signature information have been established or provided. In some embodiments, the operational mode occurs after a setup or learning mode. In other embodiments, the operational mode occurs once the machine 124 is started and is being operated by an end user and baseline data may be gathered during the operational mode.

The frequency analysis module 412 performs an operational frequency analysis during operation mode using vibration information from sensor data received by the sensor module 302. In some embodiments, the operational frequency analysis is a Fourier analysis. A Fourier analysis is a method of converting data from a time domain to a frequency domain. A Fourier analysis is based on the idea that a waveform may deconstructed into discrete sinusoidal frequencies, each with a particular magnitude and phase shift. Often a Fourier analysis is displayed on a graph with frequencies on a horizonal axis and magnitude information on a vertical axis.

In some embodiments, the operational frequency analysis is a discrete Fourier transform ("DFT"), which uses discrete sampling to perform a Fourier transform. In other embodiments, the operational frequency analysis is an FFT, which is an algorithm to perform a DFT. An FFT is typically computationally more efficient than a DFT and produces results that are typically similar enough to a DFT to produce accurate results. In some embodiments, the frequency analysis module 412 uses a sampling rate for the DFT and/or FFT based on machine speed. In some embodiments, the frequency analysis module 412 uses a sampling rate and produces results that are comparable to a vibration signature of the machine 124, which may be used as signature information.

In some embodiments, the frequency analysis module 412 uses vibration information units of acceleration in gravity ("g's") or g-force where acceleration is based on the earth's gravitational pull. For example, 1 g is 9.8 meters per second squared (m/s²). Using units of g's, in some embodiments, is a convenient measurement for frequency analysis. In other embodiments, the frequency analysis module 412 uses vibration information in terms of velocity. However, velocity measurements may be less useful at higher frequencies. In some embodiments, vibration information received by the sensor module 302 is integrated to velocity. In other embodiments, when signals are measured at frequencies over 1 kHz, the preferred units are g's.

In some embodiments, the frequency analysis module 412 performs an operational frequency analysis to produce vibration information in the form of acceleration magnitudes at various frequencies. The vibration information may be divided into various bands where the bands are based on machine speed. In some embodiments, common faults are referenced in terms of frequency orders, 1x, 2x, and so on, where 1x is one times running speed of the machine 124. For example, 60 Hz would correspond to 3600 revolutions-per-minute ("rpm"), 50 Hz would correspond to 3000 rpm, etc. Therefore, when 1x corresponds to 60 Hz, 2x would correspond to 120 Hz. Bearing faults and other types of faults are often expressed in multiples of machine speed (e.g. 0.5x, 1x, 2x, 3x, etc.) and certain faults are associated with a particular multiple of machine speed. Thus, a vibration signature for a particular machine speed, such as full speed, may include acceleration magnitudes at particular frequencies where a vibration signature for another machine speed for the same machine 124, such as half speed, may include different acceleration magnitudes at the same particular frequencies or even different acceleration magnitudes at different frequencies. Thus, beneficially the frequency analysis module 412 performs an operational frequency analysis, such as a FFT, on vibration data for a particular measured machine speed.

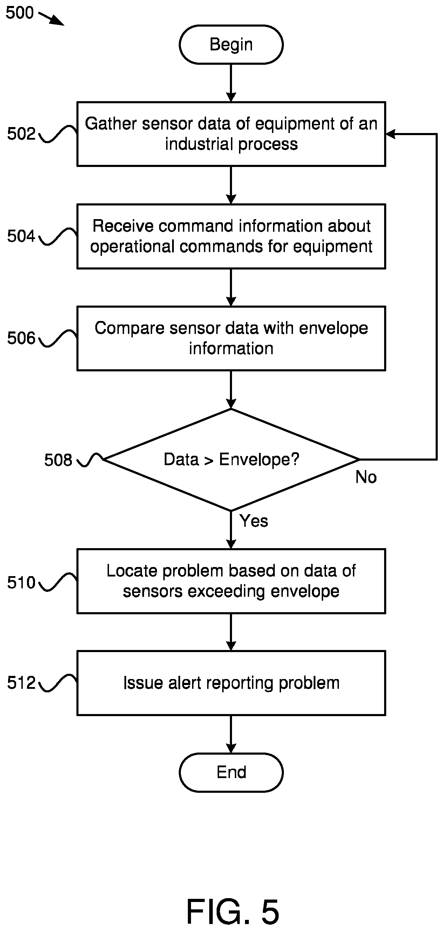

Figure 5 is a schematic flowchart diagram illustrating one embodiment of a method 500 for using sensor data and operational data of an industrial process to identify failures. The method 500 begins and gathers 502 sensor data from one or more sensors 115, 167, 168, 169, 170, etc. sensing conditions on equipment 124, 125, 126 of an industrial process 120 and receives 504 command information about operational commands issued to the equipment 124, 125, 126 of the industrial process 120. The method 500 compares 506, for each sensor (e.g. 115) of the one or more sensors 1 15, 167, 168, 169, 170, etc., the sensor data with signature information for the sensor 115. The signature information for the sensor 115 is relevant for operational commands issued to the equipment 124, 125, 126.

The method 500 determines 508 if the sensor data of a sensor 115 exceeds the signature information corresponding to the sensor 115. If the method 500 determines 508 that the sensor data of a sensor 115 does not exceed the signature information corresponding to the sensor 115, the method 500 returns and gathers 502 sensor data from the one or more sensors 115, 167, 168, 169, 170, etc. sensing conditions on equipment 124, 125, 126 of an industrial process 120 and receives 504 command information about operational commands issued to the equipment 124, 125, 126 of the industrial process 120. If the method 500 determines 508 that the sensor data of a sensor 115 exceeds the signature information corresponding to the sensor 115, the method 500 locates 510 a problem with a piece of equipment (e.g. 124) of the industrial process 120 monitored by the sensor 115 based on the sensor data exceeding the signature information for the sensor 115 and issues 512 an alert reporting the problem, and the method 500 ends. In various embodiments, the steps of the method 500 are implemented with one or more of the sensor module 302, the command module 304, the comparison module 306, the signature module 308, the location module 310 and the alert module 312.

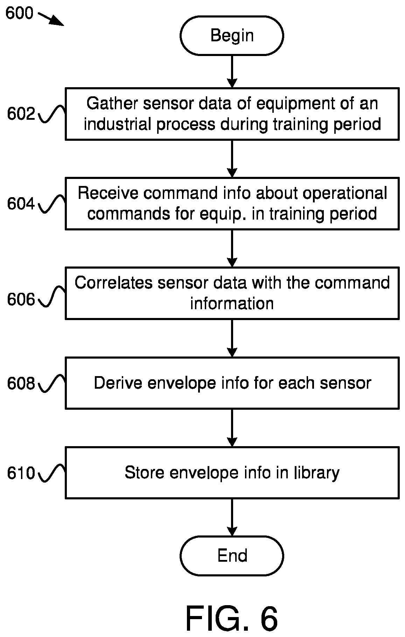

Figure 6 is a schematic flowchart diagram illustrating one embodiment of a method 600 for using sensor data and operational data of an industrial process 120 to develop signature information for a sensor (e.g. 115). The method 600 begins and gathers 602 sensor data from the one or more sensors 115, 167, 168, 169, 170, etc. during a training period and gathers 604 command information about operational commands issued to the equipment 124, 125, 126 of the industrial process 120 during the training period. The method 600 correlates 606 sensor data for each of the one or more sensors 115, 167, 168, 169, 170, etc. with the command information and derives 608 signature information for each sensor of the one or more sensors 115, 167, 168, 169, 170, etc. for various operational conditions associated with the command information. The signature information represents normal operation within the industrial process 120. The method 600 stores the signature information in the signature database 404, and the method 600 ends. In various embodiments, steps of the method 600 are implemented with one or more of the sensor module 302, the command module 304, the signature derivation module 402 and the signature database 404.

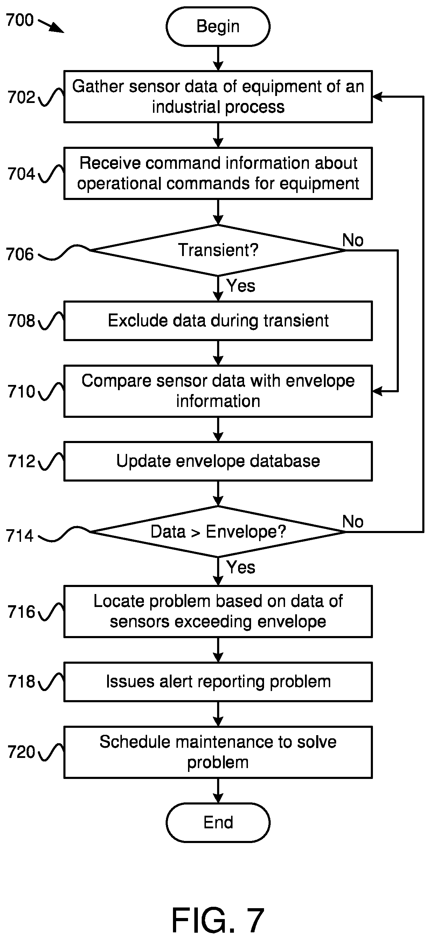

Figure 7 is a schematic flowchart diagram illustrating another embodiment of a method 700 for using sensor data and operational data of an industrial process to identify failures. The method 700 begins and gathers 702 sensor data from one or more sensors 115, 167, 168, 169, 170, etc. sensing conditions on equipment 124, 125, 126 of an industrial process 120 and receives 704 command information about operational commands issued to the equipment 124, 125, 126 of the industrial process 120.

The method 700 determines 706 if a transient is occurring. If the method 700 determines 706 that a transient is occurring, the method 700 excludes 708 sensor data during a transient period while the transient is occurring and compares 710, for each sensor (e.g. 115) of the one or more sensors115, 167, 168, 169, 170, etc., the sensor data with signature information for the sensor 115. The signature information for the sensor 115 is relevant for operational commands issued to the equipment 124, 125, 126. If the method 700 determines 706 that no transient is occurring, the method 700 compares 710, for each sensor (e.g. 115) of the one or more sensors 115, 167, 168, 169, 170, etc., the sensor data with signature information for the sensor 115.

The method 700 updates 712 the signature database 404 where the sensor data is deemed to be during normal operation, for example, by not exceeding an applicable signature by a threshold amount. The method 700 determines 714 if the sensor data of a sensor 115 exceeds the signature information corresponding to the sensor 115. If the method 700 determines 714 that the sensor data of a sensor 115 does not exceed the signature information corresponding to the sensor 115, the method 700 returns and gathers 702 sensor data from the one or more sensors 115, 167, 168, 169, 170, etc. sensing conditions on equipment 124, 125, 126 of an industrial process 120 and receives 704 command information about operational commands issued to the equipment 124, 125, 126 of the industrial process 120.

If the method 700 determines 714 that the sensor data of a sensor 115 exceeds the signature information corresponding to the sensor 115, the method 700 locates 716 a problem with a piece of equipment (e.g. 124) of the industrial process 120 monitored by the sensor 115 based on the sensor data exceeding the signature information for the sensor 115 and issues 718 an alert reporting the problem and schedules 720 maintenance to solve the problem, and the method 700 ends. In various embodiments, the steps of the method 700 are implemented with one or more of the sensor module 302, the command module 304, the comparison module 306, the signature module 308, the location module 310, the alert module 312, the signature derivation module 402, the signature database 404, the synchronization module 406, the transient filter module 408, and the system failure analysis module 410.

## Claims

1. A method comprising:
gathering (502) sensor data from two or more sensors (115, 167, 168, 169, 170, 230, 232) sensing conditions on equipment (124, 125, 126, 220) of an industrial process (120, 200),
wherein a portion of the two or more sensors (115, 167, 168, 169, 170, 230, 232) comprises one or more internal sensors (115, 230) connected to drives (110, 210) driving the equipment (124, 125, 126, 220) and
the one or more internal sensors (115, 230) providing information for determining whether to issue operational commands to the equipment or to report a problem, and
a portion of the two or more sensors (115, 167, 168, 169, 170, 230, 232) comprises one or more external sensors (167, 168, 169, 170, 232) of an external condition monitoring system (130, 160, 270),
the one or more internal sensors (115, 230) operating separately from the external condition monitoring system (130, 160, 270);
receiving (504) command information about the operational commands issued to the equipment (124, 125, 126, 220) of the industrial process (120, 200);
for each sensor of the two or more sensors (115, 167, 168, 169, 170, 230, 232),
comparing (506) the sensor data with signature information for the sensor,
wherein the signature information for the sensor is relevant for the operational commands issued to the equipment (124, 125, 126, 220);
determining (508) if the sensor data of at least two sensors of the two or more sensors (115, 167, 168, 169, 170, 230, 232) simultaneously exceed the signature information corresponding to each of the at least two sensors,
wherein at least one of the at least two sensors of the two or more sensors comprises an internal sensor (115, 230) and at least one of the at least two sensors of the two or more sensors comprises an external sensor (167, 168, 169, 170, 232), and
wherein information from the external sensor complements information from the internal sensor;
locating (510) a problem with a piece of equipment (124, 125, 126, 220) of the industrial process (120, 200) monitored by the two or more sensors (115, 167, 168, 169, 170, 230, 232) by using the sensor data exceeding the signature information corresponding to each of the at least two sensors; and
issuing (512) an alert reporting the problem,
wherein determining (508) if the sensor data of the at least two sensors of the two or more sensors (115, 167, 168, 169, 170, 230, 232) exceeds the signature information for the sensor further comprises excluding transient data.

2. The method of claim 1, wherein the sensor data for each sensor of the two or more sensors (115, 167, 168, 169, 170, 230, 232) is synchronized with each other and synchronized with the command information of the issued operational commands.

3. The method of claim 1, wherein at least a portion of the two or more sensors (115, 167, 168, 169, 170, 230, 232) sense conditions associated with two or more pieces of equipment (124, 125, 126, 220) of the industrial process (120, 200).

4. The method of claim 1, wherein at least a portion of the two or more sensors are part of a machine safety monitoring system and/or a condition monitoring system.

5. The method of one of claims 1 to 4, wherein the signature information for each sensor of the two or more sensors (115, 167, 168, 169, 170, 230, 232) is derived by:
gathering (602) sensor data from the two or more sensors (115, 167, 168, 169, 170, 230, 232) during a training period;
gathering (604) command information about operational commands issued to the equipment (124, 125, 126, 220) of the industrial process (120, 200) during the training period;
correlating (606) sensor data for each of the two or more sensors (115, 167, 168, 169, 170, 230, 232) with the command information; and
deriving (608) signature information for each sensor of the two or more sensors (115, 167, 168, 169, 170, 230, 232) for various operational conditions associated with the command information, the signature information representing normal operation.

6. The method of claim 5, wherein the training period comprises a period when the equipment (124, 125, 126, 220) of the industrial process (120, 200) is functioning as intended; or
further comprising updating the signature information for operations beyond the training period; or
further comprising using machine learning for deriving the signature information.

7. The method of one of claims 1 to 6, wherein at least a portion of the two or more sensors (115, 167, 168, 169, 170, 230, 232) sense vibration information.

8. The method of one of claims 1 to 7, wherein a sensor of the two or more sensors (115, 167, 168, 169, 170, 230, 232) senses vibration, acoustic noise, temperature, pressure, strain, movement in a 3 dimensional space, voltage and/or current.

9. A system comprising:
drives (110, 210) configured for driving equipment (124, 125, 126, 220) of an industrial process (120, 200);
two or more sensors (115, 167, 168, 169, 170, 230, 232) configured for sensing conditions on the equipment (124, 125, 126, 220) of the industrial process (120, 200),
wherein a portion of the two or more sensors (115, 167, 168, 169, 170, 230, 232) comprises one or more internal sensors (115, 230) connected to the drives (110, 210) ,
and
the one or more internal sensors (115, 230) are configured for providing information for determining whether to issue operational commands to the equipment or to report a problem, and
a portion of the two or more sensors (115, 167, 168, 169, 170, 230, 232) comprises one or more external sensors (167, 168, 169, 170, 232) of an external condition monitoring system (130, 160, 270),
the one or more internal sensors (115, 230) being configured for operating separately from the external condition monitoring system (130, 160, 270);
a sensor module (302) configured to gather sensor data from the two or more sensors (115, 167, 168, 169, 170, 230, 232);
a command module (304) configured to receive command information about the operational commands issued to the equipment (124, 125, 126, 220) of the industrial process (120, 200);
a comparison module (306) configured to, for each sensor of the two or more sensors (115, 167, 168, 169, 170, 230, 232),
compare the sensor data with signature information for the sensor,
wherein the signature information for the sensor is relevant for the operational commands issued to the equipment (124, 125, 126, 220);
a signature module (308) configured to determine if the sensor data of at least two sensors of the two or more sensors (115, 167, 168, 169, 170, 230, 232) simultaneously exceeds the signature information corresponding to each of the at least two sensors (115, 167, 168, 169, 170, 230, 232),
wherein at least one of the at least two sensors of the two or more sensors comprises an internal sensor (115, 230) and at least one of the at least two sensors of the two or more sensors comprises an external sensor (167, 168, 169, 170, 232), and
wherein information from the external sensor complements information from the internal sensor;
a location module (310) configured to locate a problem with a piece of equipment (124, 125, 126, 220) of the industrial process (120, 200) monitored by the two or more sensors (115, 167, 168, 169, 170) by using the sensor data exceeding the signature information for the at least two sensors (115, 167, 168, 169, 170, 230, 232); and
an alert module (312) configured to issue an alert reporting the problem,
wherein at least a portion of said modules comprise one or more of hardware circuits, a programmable hardware device and executable code, the executable code stored on one or more computer readable storage media, and
further comprising a transient filter module (408) configured to exclude transient data from a sensor data of a sensor of the two or more sensors (115, 167, 168, 169, 170, 230, 232) while the signature module determines if the sensor data exceeds the signature information for the sensor.

10. The system of claim 9, further comprising a synchronization module (406) configured to synchronize the sensor data for each sensor of the two or more sensors (115, 167, 168, 169, 170, 230, 232) with each other and with the command information of the issued operational commands.

11. The system of claim 9, wherein the signature information for each sensor of the two or more sensors (115, 167, 168, 169, 170, 230, 232) is derived by using machine learning, wherein the system is configured to:
gather sensor data from the two or more sensors (115, 167, 168, 169, 170, 230, 232) during a training period;
gather command information about operational commands issued to the equipment (124, 125, 126, 220) of the industrial process (120, 200) during the training period;
correlate sensor data for each of the two or more sensors with the command information;
and
derive signature information for each sensor of the two or more sensors (115, 167, 168, 169, 170, 230, 232) for various operational conditions associated with the command information, the signature information representing normal operation.

12. The system of claim 9, wherein at least a portion of the two or more sensors (115, 167, 168, 169, 170, 230, 232) are embedded in one or more pieces of equipment (124, 125, 126, 220) of the industrial process (120, 200) and wherein at least a portion of the two or more sensors (115, 167, 168, 169, 170, 230, 232) are part of a safety monitoring system and/or a condition monitoring system.

13. A computer program product comprising a computer readable storage medium having program code embodied therein, the program code executable by a processor for:
gathering (502) sensor data from two or more sensors (115, 167, 168, 169, 170, 230, 232) sensing conditions on equipment (124, 125, 126, 220) of an industrial process (120, 200),
wherein a portion of the two or more sensors (115, 167, 168, 169, 170, 230, 232) comprises one or more internal sensors (115, 230) connected to drives (110, 210) driving the equipment (124, 125, 126, 220) and
the one or more internal sensors (115, 230) providing information for determining whether to issue operational commands to the equipment or to report a problem, and
a portion of the two or more sensors (115, 167, 168, 169, 170, 230, 232) comprises one or more external sensors (167, 168, 169, 170, 232) of an external condition monitoring system (130, 160, 270),
the one or more internal sensors (115, 230) operating separately from the external condition monitoring system (130, 160, 270);
receiving (504) command information about the operational commands issued to the equipment (124, 125, 126, 220) of the industrial process (120, 200);
for each sensor of the two or more sensors (115, 167, 168, 169, 170, 230, 232),
comparing (506) the sensor data with signature information for the sensor,
wherein the signature information for the sensor is relevant for the operational commands issued to the equipment (124, 125, 126, 220);
determining (508) if the sensor data of at least two sensors of the two or more sensors (115, 167, 168, 169, 170, 230, 232) simultaneously exceed the signature information corresponding to each of the at least two sensors,
wherein at least one of the at least two sensors of the two or more sensors comprises an internal sensor (115, 230) and at least one of the at least two sensors of the two or more sensors comprises an external sensor (167, 168, 169, 170, 232), and
wherein information from the external sensor complements information from the internal sensor;
locating (510) a problem with a piece of equipment (124, 125, 126, 220) of the industrial process (120, 200) monitored by the two or more sensors (115, 167, 168, 169, 170, 230, 232) by using the sensor data exceeding the signature information corresponding to each of the at least two sensors; and
issuing (512) an alert reporting the problem,
wherein determining (508) if the sensor data of the at least two sensors of the two or more sensors (115, 167, 168, 169, 170, 230, 232) exceeds the signature information for the sensor further comprises excluding transient data.

14. The computer program product of claim 13, the program code further configured to derive the signature information for each sensor of the one or more sensors (115, 167, 168, 169, 170, 230, 232) by:
gathering (602) sensor data from one or more sensors (115, 167, 168, 169, 170, 230, 232) during a training period;
gathering (604) command information about operational commands issued to the equipment (124, 125, 126, 220) of the industrial process (120, 200) during the training period;
correlating (606) sensor data for each of the one or more sensors (115, 167, 168, 169, 170, 230, 232) with the command information; and
deriving (608), using machine learning, signature information for each sensor of the one or more sensors (115, 167, 168, 169, 170, 230, 232) for various operational conditions associated with the command information, the signature information representing normal operation.

## Patentansprüche

1. Ein Verfahren aufweisend:
Sammeln (502) von Sensordaten von zwei oder mehr Sensoren (115, 167, 168, 169, 170, 230, 232), die Zustände an Ausrüstung (124, 125, 126, 220) eines industriellen Prozesses (120, 200) erfassen,
wobei ein Abschnitt der zwei oder mehr Sensoren (115, 167, 168, 169, 170, 230, 232) einen oder mehrere interne Sensoren (115, 230) aufweist, die mit Antrieben (110, 210) verbunden sind, die die Ausrüstung (124, 125, 126, 220) antreiben, und
der eine oder die mehreren internen Sensoren (115, 230) Informationen liefern, um zu bestimmen, ob Betriebsbefehle an das Gerät ausgegeben oder ein Problem gemeldet werden soll, und
ein Abschnitt der zwei oder mehr Sensoren (115, 167, 168, 169, 170, 230, 232) einen oder mehrere externe Sensoren (167, 168, 169, 170, 232) eines externen Zustandsüberwachungssystems (130, 160, 270) aufweist,
wobei der eine oder die mehreren internen Sensoren (115, 230) getrennt von dem externen Zustandsüberwachungssystem (130, 160, 270) arbeiten;
Empfangen (504) von Befehlsinformationen über die an die Ausrüstung (124, 125, 126, 220) des industriellen Prozesses (120, 200) ausgegebenen Betriebsbefehle;
für jeden Sensor der zwei oder mehr Sensoren (115, 167, 168, 169, 170, 230, 232),
Vergleichen (506) der Sensordaten mit Signaturinformationen für den Sensor,
wobei die Signaturinformation für den Sensor für die an die Ausrüstung (124, 125, 126, 220) ausgegebenen Betriebsbefehle relevant ist;
Bestimmen (508), ob die Sensordaten von mindestens zwei Sensoren der zwei oder mehr Sensoren (115, 167, 168, 169, 170, 230, 232) gleichzeitig die Signaturinformation überschreiten, die jedem der mindestens zwei Sensoren entspricht,
wobei mindestens einer der mindestens zwei Sensoren der zwei oder mehr Sensoren einen internen Sensor (115, 230) aufweist und mindestens einer der mindestens zwei Sensoren der zwei oder mehr Sensoren einen externen Sensor (167, 168, 169, 170, 232) aufweist, und
wobei die Informationen des externen Sensors die Informationen des internen Sensors ergänzen;
Lokalisieren (510) eines Problems mit einem Ausrüstungsteil (124, 125, 126, 220) des industriellen Prozesses (120, 200), das von den zwei oder mehr Sensoren (115, 167, 168, 169, 170, 230, 232) überwacht wird, indem die Sensordaten verwendet werden, die die Signaturinformationen, die jedem der mindestens zwei Sensoren entsprechen, überschreiten; und
Ausgeben (512) einer Warnung, die das Problem meldet,
wobei das Bestimmen (508), ob die Sensordaten der mindestens zwei Sensoren der zwei oder mehr Sensoren (115, 167, 168, 169, 170, 230, 232) die Signaturinformationen für den Sensor überschreiten, weiterhin das Ausschließen von transienten Daten aufweist.

2. Das Verfahren nach Anspruch 1, wobei die Sensordaten für jeden Sensor der zwei oder mehr Sensoren (115, 167, 168, 169, 170, 230, 232) miteinander synchronisiert und mit den Befehlsinformationen der ausgegebenen Betriebsbefehle synchronisiert werden.

3. Das Verfahren nach Anspruch 1, bei dem mindestens ein Abschnitt der zwei oder mehr Sensoren (115, 167, 168, 169, 170, 230, 232) Bedingungen erfassen, die mit zwei oder mehr Ausrüstungsteilen (124, 125, 126, 220) des industriellen Prozesses (120, 200) assoziiert sind.

4. Das Verfahren nach Anspruch 1, wobei zumindest ein Abschnitt der zwei oder mehr Sensoren Teil eines Überwachungssystems für die Maschinensicherheit und/oder eines Zustandsüberwachungssystems ist.

5. Das Verfahren nach einem der Ansprüche 1 bis 4, wobei die Signaturinformation für jeden Sensor der zwei oder mehr Sensoren (115, 167, 168, 169, 170, 230, 232) abgeleitet wird durch:
Sammeln (602) von Sensordaten von den zwei oder mehr Sensoren (115, 167, 168, 169, 170, 230, 232) während einer Trainingsperiode;
Sammeln (604) von Befehlsinformationen über Betriebsbefehle, die an die Ausrüstung (124, 125, 126, 220) des industriellen Prozesses (120, 200) während des Trainingszeitraums ausgegeben wurden;
Korrelieren (606) von Sensordaten für jeden der zwei oder mehr Sensoren (115, 167, 168, 169, 170, 230, 232) mit den Befehlsinformationen; und
Ableiten (608) von Signaturinformationen für jeden Sensor der zwei oder mehr Sensoren (115, 167, 168, 169, 170, 230, 232) für verschiedene Betriebsbedingungen, die mit den Befehlsinformationen assoziiert sind, wobei die Signaturinformationen den Normalbetrieb darstellen.

6. Das Verfahren nach Anspruch 5, wobei die Trainingsperiode eine Periode aufweist, in der die Ausrüstung (124, 125, 126, 220) des industriellen Prozesses (120, 200) wie vorgesehen funktioniert; oder
weiter aufweisend das Aktualisieren der Signaturinformation für Operationen außerhalb der Trainingsperiode; oder
weiter aufweisend die Verwendung von maschinellem Lernen zur Ableitung der Signaturinformation.

7. Das Verfahren nach einem der Ansprüche 1 bis 6, wobei zumindest ein Abschnitt der zwei oder mehr Sensoren (115, 167, 168, 169, 170, 230, 232) Vibrationsinformationen erfasst.

8. Das Verfahren nach einem der Ansprüche 1 bis 7, wobei ein Sensor der zwei oder mehr Sensoren (115, 167, 168, 169, 170, 230, 232) Vibrationen, akustisches Rauschen, Temperatur, Druck, Dehnung, Bewegung in einem dreidimensionalen Zwischenraum, Spannung und/oder Strom erfasst.

9. Ein System aufweisend:
Antriebe (110, 210), die für den Antrieb von Ausrüstung (124, 125, 126, 220) eines industriellen Prozesses (120, 200) konfiguriert sind;
zwei oder mehr Sensoren (115, 167, 168, 169, 170, 230, 232), die zum Erfassen von Zuständen an der Ausrüstung (124, 125, 126, 220) des industriellen Prozesses (120, 200) konfiguriert sind,
wobei ein Abschnitt der zwei oder mehr Sensoren (115, 167, 168, 169, 170, 230, 232) einen oder mehrere interne Sensoren (115, 230) aufweist, die mit den Antrieben (110, 210) verbunden sind,
und
der eine oder die mehreren internen Sensoren (115, 230) so konfiguriert sind, dass sie Informationen bereitstellen, um zu bestimmen, ob Betriebsbefehle an die Ausrüstung ausgegeben werden sollen oder ob ein Problem gemeldet werden soll, und
ein Abschnitt der zwei oder mehr Sensoren (115, 167, 168, 169, 170, 230, 232) einen oder mehrere externe Sensoren (167, 168, 169, 170, 232) eines externen Zustandsüberwachungssystems (130, 160, 270) aufweist,
wobei der eine oder die mehreren internen Sensoren (115, 230) so konfiguriert sind, dass sie getrennt von dem externen Zustandsüberwachungssystem (130, 160, 270) arbeiten;
ein Sensormodul (302), das so konfiguriert ist, dass es Sensordaten von den zwei oder mehr Sensoren (115, 167, 168, 169, 170, 230, 232) sammelt;
ein Befehlsmodul (304), das so konfiguriert ist, dass es Befehlsinformationen über die an die Ausrüstung (124, 125, 126, 220) des industriellen Prozesses (120, 200) ausgegebenen Betriebsbefehle empfängt;
ein Vergleichsmodul (306), das dafür konfiguriert ist, für jeden Sensor der zwei oder mehr Sensoren (115, 167, 168, 169, 170, 230, 232)
die Sensordaten mit Signaturinformationen für den Sensor zu vergleichen,
wobei die Signaturinformation für den Sensor für die an die Ausrüstung (124, 125, 126, 220) ausgegebenen Betriebsbefehle relevant ist;
ein Signaturmodul (308), das so konfiguriert ist, dass es bestimmt, ob die Sensordaten von mindestens zwei Sensoren der zwei oder mehr Sensoren (115, 167, 168, 169, 170, 230, 232) gleichzeitig die Signaturinformationen überschreiten, die jedem der mindestens zwei Sensoren (115, 167, 168, 169, 170, 230, 232) entsprechen,
wobei mindestens einer der mindestens zwei Sensoren der zwei oder mehr Sensoren einen internen Sensor (115, 230) aufweist und mindestens einer der mindestens zwei Sensoren der zwei oder mehr Sensoren einen externen Sensor (167, 168, 169, 170, 232) aufweist, und
wobei die Informationen des externen Sensors die Informationen des internen Sensors ergänzen;
ein Lokalisierungsmodul (310), das so konfiguriert ist, dass es ein Problem mit einem Ausrüstungsteil (124, 125, 126, 220) des industriellen Prozesses (120, 200) lokalisiert, das von den zwei oder mehr Sensoren (115, 167, 168, 169, 170) überwacht wird, indem es die Sensordaten verwendet, die die Signaturinformationen für die mindestens zwei Sensoren (115, 167, 168, 169, 170, 230, 232) überschreiten; und
ein Alarmmodul (312), das so konfiguriert ist, dass es einen Alarm ausgibt, der das Problem meldet,
wobei mindestens ein Abschnitt der Module eine oder mehrere von Hardware-Schaltungen, eine programmierbare Hardware-Vorrichtung und einen ausführbaren Code aufweist, wobei der ausführbare Code auf einem oder mehreren computerlesbaren Speichern gespeichert ist, und
ferner ein Transienten-Filtermodul (408) aufweist, das so konfiguriert ist, dass es Transienten-Daten aus den Sensordaten eines Sensors der zwei oder mehr Sensoren (115, 167, 168, 169, 170, 230, 232) ausschließt, während das Signaturmodul bestimmt, ob die Sensordaten die Signaturinformation für den Sensor überschreiten.

10. Das System nach Anspruch 9, das weiterhin ein Synchronisationsmodul (406) aufweist, das so konfiguriert ist, dass es die Sensordaten für jeden Sensor der zwei oder mehr Sensoren (115, 167, 168, 169, 170, 230, 232) miteinander und mit den Befehlsinformationen der ausgegebenen Betriebsbefehle synchronisiert.

11. Das System nach Anspruch 9, wobei die Signaturinformationen für jeden Sensor der zwei oder mehr Sensoren (115, 167, 168, 169, 170, 230, 232) durch Verwendung von maschinellem Lernen abgeleitet werden, wobei das System konfiguriert ist, um:
Sammeln von Sensordaten von den zwei oder mehr Sensoren (115, 167, 168, 169, 170, 230, 232) während einer Trainingsperiode;
Sammeln von Befehlsinformationen über Betriebsbefehle, die an die Ausrüstung (124, 125, 126, 220) des industriellen Prozesses (120, 200) während des Trainingszeitraums ausgegeben wurden;
Korrelieren von Sensordaten für jeden der zwei oder mehr Sensoren mit den Befehlsinformationen; und
Ableiten von Signaturinformationen für jeden Sensor der zwei oder mehr Sensoren (115, 167, 168, 169, 170, 230, 232) für verschiedene Betriebsbedingungen, die mit den Befehlsinformationen assoziiert sind, wobei die Signaturinformationen den Normalbetrieb darstellen.

12. Das System nach Anspruch 9, wobei mindestens ein Abschnitt der zwei oder mehr Sensoren (115, 167, 168, 169, 170, 230, 232) in ein oder mehrere Ausrüstungsteile (124, 125, 126, 220) des industriellen Prozesses (120, 200) eingebettet ist und wobei mindestens ein Abschnitt der zwei oder mehr Sensoren (115, 167, 168, 169, 170, 230, 232) Teil eines Sicherheitsüberwachungssystems und/oder eines Zustandsüberwachungssystems ist.

13. Ein Computerprogrammprodukt, das ein computerlesbares Speichermedium mit darin verkörpertem Programmcode aufweist, wobei der Programmcode durch einen Prozessor ausführbar ist, um:
Sammeln (502) von Sensordaten von zwei oder mehr Sensoren (115, 167, 168, 169, 170, 230, 232), die Zustände an Ausrüstung (124, 125, 126, 220) eines industriellen Prozesses (120, 200) erfassen,
wobei ein Abschnitt der zwei oder mehr Sensoren (115, 167, 168, 169, 170, 230, 232) einen oder mehrere interne Sensoren (115, 230) aufweist, die mit Antrieben (110, 210) verbunden sind, die die Ausrüstung (124, 125, 126, 220) antreiben, und
der eine oder die mehreren internen Sensoren (115, 230) Informationen liefern, um zu bestimmen, ob Betriebsbefehle an das Gerät ausgegeben oder ein Problem gemeldet werden soll, und
ein Abschnitt der zwei oder mehr Sensoren (115, 167, 168, 169, 170, 230, 232) einen oder mehrere externe Sensoren (167, 168, 169, 170, 232) eines externen Zustandsüberwachungssystems (130, 160, 270) aufweist,
wobei der eine oder die mehreren internen Sensoren (115, 230) getrennt von dem externen Zustandsüberwachungssystem (130, 160, 270) arbeiten;
Empfangen (504) von Befehlsinformationen über die an die Ausrüstung (124, 125, 126, 220) des industriellen Prozesses (120, 200) ausgegebenen Betriebsbefehle;
für jeden Sensor der zwei oder mehr Sensoren (115, 167, 168, 169, 170, 230, 232),
Vergleichen (506) der Sensordaten mit Signaturinformationen für den Sensor,
wobei die Signaturinformation für den Sensor für die an die Ausrüstung (124, 125, 126, 220) ausgegebenen Betriebsbefehle relevant ist;
Bestimmen (508), ob die Sensordaten von mindestens zwei Sensoren der zwei oder mehr Sensoren (115, 167, 168, 169, 170, 230, 232) gleichzeitig die Signaturinformation überschreiten, die jedem der mindestens zwei Sensoren entspricht,
wobei mindestens einer der mindestens zwei Sensoren der zwei oder mehr Sensoren einen internen Sensor (115, 230) aufweist und mindestens einer der mindestens zwei Sensoren der zwei oder mehr Sensoren einen externen Sensor (167, 168, 169, 170, 232) aufweist, und
wobei die Informationen des externen Sensors die Informationen des internen Sensors ergänzen;
Lokalisieren (510) eines Problems mit einem Ausrüstungsteil (124, 125, 126, 220) des industriellen Prozesses (120, 200), das von den zwei oder mehr Sensoren (115, 167, 168, 169, 170, 230, 232) überwacht wird, indem die Sensordaten verwendet werden, die die Signaturinformationen, die jedem der mindestens zwei Sensoren entsprechen, überschreiten; und
Ausgeben (512) einer Warnung, die das Problem meldet,
wobei das Bestimmen (508), ob die Sensordaten der mindestens zwei Sensoren der zwei oder mehr Sensoren (115, 167, 168, 169, 170, 230, 232) die Signaturinformation für den Sensor überschreiten, weiterhin das Ausschließen von transienten Daten aufweist.

14. Das Computerprogrammprodukt nach Anspruch 13, wobei der Programmcode weiter konfiguriert ist, um die Signaturinformation für jeden Sensor des einen oder der mehreren Sensoren (115, 167, 168, 169, 170, 230, 232) abzuleiten durch
Sammeln (602) von Sensordaten von einem oder mehreren Sensoren (115, 167, 168, 169, 170, 230, 232) während einer Trainingsperiode;
Sammeln (604) von Befehlsinformationen über Betriebsbefehle, die an die Ausrüstung (124, 125, 126, 220) des industriellen Prozesses (120, 200) während des Trainingszeitraums ausgegeben wurden;
Korrelieren (606) von Sensordaten für jeden der einen oder mehreren Sensoren (115, 167, 168, 169, 170, 230, 232) mit den Befehlsinformationen; und
Ableiten (608), unter Verwendung von maschinellem Lernen, von Signaturinformationen für jeden Sensor des einen oder der mehreren Sensoren (115, 167, 168, 169, 170, 230, 232) für verschiedene Betriebsbedingungen, die mit den Befehlsinformationen assoziiert sind, wobei die Signaturinformationen den Normalbetrieb darstellen.

## Revendications

1. Procédé comprenant les étapes consistant à :
recueillir (502) des données de capteurs provenant de deux capteurs (115, 167, 168, 169, 170, 230, 232) ou plus détectant l'état d'un équipement (124, 125, 126, 220) d'un processus industriel (120, 200),
dans lequel une partie des deux capteurs (115, 167, 168, 169, 170, 230, 232) ou plus comprend un ou plusieurs capteurs internes (115, 230) connectés à des entraînements (110, 210) entraînant l'équipement (124, 125, 126, 220) et
les un ou plusieurs capteurs internes (115, 230) fournissent des informations prévues pour déterminer s'il faut donner des commandes opérationnelles à l'équipement ou signaler un problème, et
une partie des deux capteurs (115, 167, 168, 169, 170, 230, 232) ou plus comprend un ou plusieurs capteurs externes (167, 168, 169, 170, 232) d'un système de surveillance de l'état externe (130, 160, 270),
les un ou plusieurs capteurs internes (115, 230) fonctionnant séparément du système de surveillance de l'état externe (130, 160, 270) ;
recevoir (504) des informations de commande concernant les commandes opérationnelles émises vers les équipements (124, 125, 126, 220) du processus industriel (120, 200) ;
pour chaque capteur des deux capteurs (115, 167, 168, 169, 170, 230, 232) ou plus, comparer (506) les données du capteur avec des informations de signature pour le capteur,
dans lequel les informations de signature pour le capteur sont pertinentes pour les commandes opérationnelles émises vers l'équipement (124, 125, 126, 220) ;
déterminer (508) si les données de capteur d'au moins deux capteurs des deux capteurs (115, 167, 168, 169, 170, 230, 232) ou plus dépassent simultanément les informations de signature correspondant à chacun des au moins deux capteurs,
dans lequel au moins un des deux capteurs des deux capteurs ou plus comprend un capteur interne (115, 230) et au moins un des deux capteurs des deux capteurs ou plus comprend un capteur externe (167, 168, 169, 170, 232), et
dans lequel les informations provenant du capteur externe complètent les informations provenant du capteur interne ;
localiser (510) un problème sur un équipement (124, 125, 126, 220) du processus industriel (120, 200) surveillé par les deux capteurs (115, 167, 168, 169, 170, 230, 232) ou plus en utilisant les données du capteur dépassant les informations de signature correspondant à chacun des au moins deux capteurs ; et
émettre (512) une alerte signalant le problème,
dans lequel le fait de déterminer (508) si les données du capteur des au moins deux capteurs (115, 167, 168, 169, 170, 230, 232) excèdent les informations de signature correspondant au capteur comprend l'exclusion des données transitoires.

2. Procédé selon la revendication 1, dans lequel les données de capteur de chaque capteur des deux capteurs (115, 167, 168, 169, 170, 230, 232) ou plus sont synchronisées entre elles et synchronisées avec les informations de commande des commandes opérationnelles émises.

3. Procédé selon la revendication 1, dans lequel au moins une partie des deux capteurs (115, 167, 168, 169, 170, 230, 232) ou plus détecte des conditions associées à deux équipements (124, 125, 126, 220) ou plus du processus industriel (120, 200).

4. Procédé selon la revendication 1, dans lequel au moins une partie des deux capteurs ou plus font partie d'un système de surveillance de la sécurité des machines et/ou d'un système de surveillance de l'état.

5. Procédé selon l'une des revendications 1 à 4, dans lequel les informations de signature pour chaque capteur des deux capteurs (115, 167, 168, 169, 170, 230, 232) ou plus sont dérivées par le fait de :
recueillir (602) des données de capteur des deux capteurs (115, 167, 168, 169, 170, 230, 232) ou plus pendant une période d'entraînement ;
recueillir (604) des informations de commande sur les commandes opérationnelles émises vers l'équipement (124, 125, 126, 220) du processus industriel (120, 200) au cours de la période d'entraînement ;
corréler (606) les données de capteurs pour chacun des deux capteurs (115, 167, 168, 169, 170, 230, 232) ou plus avec les informations de commande ; et
dériver (608) des informations de signature pour chaque capteur des deux capteurs (115, 167, 168, 169, 170, 230, 232) ou plus pour divers états opérationnels associés aux informations de commande, les informations de signature représentant le fonctionnement normal.

6. Procédé selon la revendication 5, dans lequel la période d'entraînement comprend une période où l'équipement (124, 125, 126, 220) du processus industriel (120, 200) fonctionne comme prévu ; ou
comprenant en outre la mise à jour des informations de signature pour les opérations au-delà de la période d'entraînement ; ou
comprenant en outre l'utilisation de l'apprentissage automatique pour dériver les informations de signature.

7. Procédé selon l'une des revendications 1 à 6, dans lequel au moins une partie des deux capteurs (115, 167, 168, 169, 170, 230, 232) ou plus détectent des informations de vibration.

8. Procédé selon l'une des revendications 1 à 7, dans lequel un capteur des deux capteurs (115, 167, 168, 169, 170, 230, 232) ou plus détecte les vibrations, le bruit acoustique, la température, la pression, la déformation, le mouvement dans un espace tridimensionnel, la tension et/ou le courant.

9. Système comprenant :
des entraînements (110, 210) configurés pour entraîner des équipements (124, 125, 126, 220) d'un processus industriel (120, 200) ;
deux capteurs (115, 167, 168, 169, 170, 230, 232) ou plus configurés pour détecter l'état d'un équipement (124, 125, 126, 220) du processus industriel (120, 200),
dans lequel une partie des deux capteurs (115, 167, 168, 169, 170, 230, 232) ou plus comprend un ou plusieurs capteurs internes (115, 230) connectés aux entraînements (110, 210), et
les un ou plusieurs capteurs internes (115, 230) sont configurés pour fournir des informations permettant de déterminer s'il faut envoyer des commandes opérationnelles à l'équipement ou signaler un problème, et
une partie des deux capteurs (115, 167, 168, 169, 170, 230, 232) ou plus comprend un ou plusieurs capteurs externes (167, 168, 169, 170, 232) d'un système de surveillance de l'état externe (130, 160, 270),
les un ou plusieurs capteurs internes (115, 230) sont configurés pour fonctionner séparément du système de surveillance de l'état externe (130, 160, 270) ;
un module de capteur (302) configuré pour recueillir des données de capteur à partir des deux capteurs (115, 167, 168, 169, 170, 230, 232) ou plus ;
un module de commande (304) configuré pour recevoir des informations de commande sur les commandes opérationnelles émises vers l'équipement (124, 125, 126, 220) du processus industriel (120, 200) ;
un module de comparaison (306) configuré pour, pour chaque capteur des deux capteurs (115, 167, 168, 169, 170, 230, 232) ou plus, comparer les données du capteur avec des informations de signature pour le capteur,
dans lequel les informations de signature pour le capteur sont pertinentes pour les commandes opérationnelles émises vers l'équipement (124, 125, 126, 220) ;
un module de signature (308) configuré pour déterminer si les données de capteur d'au moins deux capteurs des deux capteurs (115, 167, 168, 169, 170, 230, 232) ou plus dépassent simultanément les informations de signature correspondant à chacun des au moins deux capteurs (115, 167, 168, 169, 170, 230, 232),
dans lequel au moins un des deux capteurs des deux capteurs ou plus comprend un capteur interne (115, 230) et au moins un des deux capteurs des deux capteurs ou plus comprend un capteur externe (167, 168, 169, 170, 232), et
dans lequel les informations provenant du capteur externe complètent les informations provenant du capteur interne ;
un module de localisation (310) configuré pour localiser un problème avec un équipement (124, 125, 126, 220) du processus industriel (120, 200) surveillé par les deux capteurs (115, 167, 168, 169, 170) ou plus en utilisant les données du capteur dépassant les informations de signature pour les au moins deux capteurs (115, 167, 168, 169, 170, 230, 232) ; et
un module d'alerte (312) configuré pour émettre une alerte signalant le problème,
dans lequel au moins une partie desdits modules comprend un ou plusieurs circuits matériels, un dispositif matériel programmable et un code exécutable, le code exécutable étant stocké sur un ou plusieurs supports de stockage lisibles par ordinateur, et
comprenant en outre un module de filtrage des transitoires (408) configuré pour exclure les données transitoires des données d'un capteur des deux capteurs (115, 167, 168, 169, 170, 230, 232) ou plus pendant que le module de signature détermine si les données du capteur dépassent les informations de signature pour le capteur.

10. Système selon la revendication 9, comprenant en outre un module de synchronisation (406) configuré pour synchroniser les données de capteur de chaque capteur des deux capteurs (115, 167, 168, 169, 170, 230, 232) ou plus entre elles et avec les informations de commande des commandes opérationnelles émises.

11. Système selon la revendication 9, dans lequel les informations de signature pour chaque capteur des deux capteurs (115, 167, 168, 169, 170, 230, 232) ou plus sont dérivées en utilisant l'apprentissage automatique, dans lequel le système est configuré pour :
recueillir des données de capteur provenant des deux capteurs (115, 167, 168, 169, 170, 230, 232) ou plus au cours d'une période d'entraînement ;
recueillir des informations de commande sur les commandes opérationnelles émises vers l'équipement (124, 125, 126, 220) du processus industriel (120, 200) au cours de la période d'entraînement ;
corréler les données des capteurs pour chacun des deux capteurs ou plus avec les informations de commande ; et
dériver des informations de signature pour chaque capteur des deux capteurs (115, 167, 168, 169, 170, 230, 232) ou plus pour divers états opérationnels associés aux informations de commande, les informations de signature représentant le fonctionnement normal.

12. Système selon la revendication 9, dans lequel au moins une partie des deux capteurs (115, 167, 168, 169, 170, 230, 232) ou plus sont intégrés dans un ou plusieurs équipements (124, 125, 126, 220) du processus industriel (120, 200) et dans lequel au moins une partie des deux capteurs (115, 167, 168, 169, 170, 230, 232) ou plus font partie d'un système de surveillance de la sécurité et/ou d'un système de surveillance de l'état.

13. Produit de programme informatique comprenant un support de stockage lisible par ordinateur ayant un code de programme incorporé dans celui-ci, le code de programme exécutable par un processeur pour :
recueillir (502) des données de capteurs provenant de deux capteurs (115, 167, 168, 169, 170, 230, 232) ou plus détectant l'état d'un équipement (124, 125, 126, 220) d'un processus industriel (120, 200),
dans lequel une partie des deux capteurs (115, 167, 168, 169, 170, 230, 232) ou plus comprend un ou plusieurs capteurs internes (115, 230) connectés à des entraînements (110, 210) entraînant l'équipement (124, 125, 126, 220) et
les un ou plusieurs capteurs internes (115, 230) fournissent des informations prévues pour déterminer s'il faut donner des commandes opérationnelles à l'équipement ou signaler un problème, et
une partie des deux capteurs (115, 167, 168, 169, 170, 230, 232) ou plus comprend un ou plusieurs capteurs externes (167, 168, 169, 170, 232) d'un système de surveillance de l'état externe (130, 160, 270),
les un ou plusieurs capteurs internes (115, 230) fonctionnant séparément du système de surveillance de l'état externe (130, 160, 270) ;
recevoir (504) des informations de commande concernant les commandes opérationnelles émises vers les équipements (124, 125, 126, 220) du processus industriel (120, 200) ;
pour chaque capteur des deux capteurs (115, 167, 168, 169, 170, 230, 232) ou plus, comparer (506) les données du capteur avec des informations de signature pour le capteur,
dans lequel les informations de signature pour le capteur sont pertinentes pour les commandes opérationnelles émises vers l'équipement (124, 125, 126, 220) ;
déterminer (508) si les données de capteur d'au moins deux capteurs des deux capteurs (115, 167, 168, 169, 170, 230, 232) ou plus dépassent simultanément les informations de signature correspondant à chacun des au moins deux capteurs,
dans lequel au moins un des deux capteurs des deux capteurs ou plus comprend un capteur interne (115, 230) et au moins un des deux capteurs des deux capteurs ou plus comprend un capteur externe (167, 168, 169, 170, 232), et
dans lequel les informations provenant du capteur externe complètent les informations provenant du capteur interne ;
localiser (510) un problème sur un équipement (124, 125, 126, 220) du processus industriel (120, 200) surveillé par les deux capteurs (115, 167, 168, 169, 170, 230, 232) ou plus en utilisant les données du capteur dépassant les informations de signature correspondant à chacun des au moins deux capteurs ; et
émettre (512) une alerte signalant le problème,
dans lequel le fait de déterminer (508) si les données du capteur des au moins deux capteurs (115, 167, 168, 169, 170, 230, 232) excède les informations de signature correspondant au capteur comprend l'exclusion des données transitoires.

14. Produit programme d'ordinateur selon la revendication 13, le code de programme configuré en outre pour dériver les informations de signature pour chaque capteur des un ou plusieurs capteurs (115, 167, 168, 169, 170, 230, 232) par le fait de:
recueillir (602) des données de capteur d'un ou plusieurs capteurs (115, 167, 168, 169, 170, 230, 232) pendant une période d'entraînement ;
recueillir (604) des informations de commande concernant des commandes opérationnelles émises vers l'équipement (124, 125, 126, 220) du processus industriel (120, 200) pendant la période d'entraînement ;
corréler (606) les données des capteurs pour chacun des un ou plusieurs capteurs (115, 167, 168, 169, 170, 230, 232) avec les informations de commande ; et
dériver (608), en utilisant l'apprentissage automatique, des informations de signature pour chaque capteur des un ou plusieurs capteurs (115, 167, 168, 169, 170, 230, 232) pour divers états opérationnels associés aux informations de commande, les informations de signature représentant le fonctionnement normal.
